(19) Europäisches Patentamt
European Patent Office
Office européen des brevets

(11) **EP 4 319 411 A1**

(12) **EUROPEAN PATENT APPLICATION**
published in accordance with Art. 153(4) EPC

(43) Date of publication:
**07.02.2024  Bulletin 2024/06**

(21) Application number: **22806591.8**

(22) Date of filing: **05.05.2022**

(51) International Patent Classification (IPC):
**H04W 72/04** (2023.01)

(52) Cooperative Patent Classification (CPC):
**H04L 5/00; H04W 72/04; H04W 72/12**

(86) International application number:
**PCT/CN2022/091016**

(87) International publication number:
**WO 2022/237623 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021  CN 202110507908**

(71) Applicant: **Huawei Technologies Co., Ltd.
Longgang
Shenzhen, Guangdong 518129 (CN)**

(72) Inventors:
• **ZHANG, Yunhao**
  **Shenzhen, Guangdong 518129 (CN)**
• **HOU, Hailong**
  **Shenzhen, Guangdong 518129 (CN)**
• **JIN, Zhe**
  **Shenzhen, Guangdong 518129 (CN)**
• **WU, Yiqun**
  **Shenzhen, Guangdong 518129 (CN)**

(74) Representative: **Gill Jennings & Every LLP
The Broadgate Tower
20 Primrose Street
London EC2A 2ES (GB)**

(54) **DATA TRANSMISSION METHOD AND APPARATUS**

(57)    This application provides a data transmission method and apparatus, applied to the field of communication technologies, to improve system performance. The method includes: sending uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different.

First terminal device                                      Network device

S601: Determine an uplink
transmission parameter that
can be used for a first
terminal type

S602: Msg A
Random access preamble + PUSCH: for
distinguishing between terminal types

S603: Msg B
(Random access response)

FIG. 6

Processed by Luminess, 75001 PARIS (FR)

**Description**

**CROSS-REFERENCE TO RELATED APPLICATIONS**

This application claims priority to Chinese Patent Application No. 202110507908.1, filed with the China National Intellectual Property Administration on May 10, 2021 and entitled "DATA TRANSMISSION METHOD AND APPARATUS", which is incorporated herein by reference in its entirety.

**TECHNICAL FIELD**

Embodiments of this application relate to the field of communication technologies, and in particular, to a data transmission method and apparatus.

**BACKGROUND**

Communication devices in a wireless communication system include a network device and a terminal device, and an air interface resource is used for wireless communication between the communication devices. Generally, the network device indicates a parameter related to uplink and downlink scheduling, such as an uplink transmission resource or a downlink transmission resource, to the terminal device. How to improve data transmission performance between the communication devices is an important research topic.

**SUMMARY**

This application provides a data transmission method and apparatus, to indicate different terminals or different transmission scenarios through uplink transmission of a terminal in a non-connected state.

According to a first aspect, this application provides a data transmission method, including: sending uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different.

In the foregoing design, it is designed that PRUs used for different terminal types are different, and a network device may distinguish between types of terminal devices based on the uplink information. The network device may configure a related uplink and downlink scheduling parameter for each of different terminal types, to implement optimized and proper configuration. This helps improve system performance.

In a possible design, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related subsequent downlink scheduling parameter for the terminal device.

In a possible design, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information sent when the first terminal device is in a non-connected state. Before the network device is accessed, the network device is enabled to learn about a status of the terminal device, so that the network device configures the related uplink and downlink scheduling parameter as early as possible. This helps improve system performance.

In a possible design, antenna capabilities corresponding to different terminal types are different.

According to a second aspect, this application provides a data transmission method, including: sending uplink information of a first terminal device on a second resource in a first transmission manner, where the uplink information includes a preamble, the preamble is a preamble corresponding to the first transmission manner, and physical uplink shared channel resource units PRUs corresponding to preambles corresponding to different transmission manners are different; or the second resource is a PRU corresponding to the first transmission manner, and PRUs corresponding to different transmission manners are different.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.

In a possible design, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.

According to a third aspect, this application provides a data transmission method, including: obtaining configuration information, where the configuration information indicates a demodulation reference signal DMRS corresponding to N3 terminal types, where N3 is an integer greater than or equal to 1; and sending uplink information based on a DMRS corresponding to a terminal type of a first terminal device, where the uplink information includes a message 3 in a random access procedure or uplink data that is based on a configured grant CG.

In the foregoing design, the terminal types are distinguished based on a DMRS corresponding to the message 3 (Msg 3), or the terminal types are distinguished based on a DMRS in a small packet transmission process, to report the terminal types. When demodulating physical layer information, a network may know a capability of a terminal device, for example, a receive antenna capability. In this way, the network may know an antenna capability of a terminal earlier. This helps properly schedule an Msg 4 resource for the terminal.

In a possible design, the uplink information is uplink information sent when the first terminal device is in a non-connected state.

In a possible design, demodulation reference signals DMRSs corresponding to different terminal types are different.

According to a fourth aspect, this application provides a data transmission method, including: receiving uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different.

In the foregoing design, it is designed that PRUs used for different terminal types are different, and a network device may distinguish between types of terminal devices based on the uplink information. The network device may configure a related uplink and downlink scheduling parameter for each of different terminal types, to implement optimized and proper configuration. This helps improve system performance.

In a possible design, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related subsequent downlink scheduling parameter for the terminal device.

In a possible design, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information received from the terminal device when the first terminal device is in a non-connected state. Before the network device is accessed, the network device is enabled to learn about a status of the terminal device, so that the network device configures the related uplink and downlink scheduling parameter as early as possible. This helps improve system performance.

In a possible design, antenna capabilities corresponding to different terminal types are different.

According to a fifth aspect, this application provides a data transmission method, including: receiving uplink information of a first terminal device on a second resource, where a transmission manner of the uplink information is a first transmission manner; the uplink information includes a preamble, the preamble is a preamble corresponding to the first transmission manner, and physical uplink shared channel resource units PRUs corresponding to preambles corresponding to different transmission manners are different; or the second resource is a PRU corresponding to the first transmission manner, and PRUs corresponding to different transmission manners are different.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.

In a possible design, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.

According to a sixth aspect, this application provides a data transmission method, including: sending configuration information, where the configuration information indicates a demodulation reference signal DMRS corresponding to N3 terminal types, where N3 is an integer greater than or equal to 1; and receiving uplink information based on a DMRS corresponding to a terminal type of a first terminal device, where the uplink information includes a message 3 in a random access procedure or uplink data that is based on a configured grant CG.

In the foregoing design, the terminal types are distinguished based on a DMRS included in the message 3 (Msg 3), or the terminal types are distinguished based on a DMRS in a small packet transmission process, to report the terminal types. When demodulating physical layer information, a network may know a capability of a terminal device, for example, a receive antenna capability. In this way, the network may learn about an antenna capability of a terminal earlier. This helps properly schedule an Msg 4 resource for the terminal.

In a possible design, the uplink information is uplink information received when the first terminal device is in a non-connected state.

In a possible design, demodulation reference signals DMRSs corresponding to different terminal types are different.

According to a seventh aspect, this application provides a data transmission apparatus. The data transmission apparatus may be a terminal device, an apparatus in the terminal device, or an apparatus that can be matched with the terminal device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the processing module is configured to generate uplink information; and

the communication module is configured to send the uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a physical uplink shared channel resource unit PRU that can be used for a first terminal type, a type of the first terminal device is the first terminal type, and PRUs that can be used for different terminal types are different.

In the foregoing design, it is designed that PRUs used for different terminal types are different, and a network device may distinguish between types of terminal devices based on the uplink information. The network device may configure a related uplink and downlink scheduling parameter for each of different terminal types, to implement optimized and proper configuration. This helps improve system performance.

In a possible design, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related uplink scheduling parameter for the terminal device.

In a possible design, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information sent when the first terminal device is in a non-connected state. Before the network device is accessed, the network device is enabled to learn about a status of the terminal device, so that the network device configures the related uplink and downlink scheduling parameter as early as possible. This helps improve system performance.

According to an eighth aspect, this application provides a data transmission apparatus. The data transmission apparatus may be a terminal device, an apparatus in the terminal device, or an apparatus that can be matched with the terminal device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the processing module is configured to generate uplink information of a first terminal device; and
the communication module is configured to send the uplink information of the first terminal device on a second resource in a first transmission manner, where the uplink information includes a preamble, the preamble is a preamble corresponding to the first transmission manner, and physical uplink shared channel resource units PRUs corresponding to preambles corresponding to different transmission manners are different; or the second resource is a PRU corresponding to the first transmission manner, and PRUs corresponding to different transmission manners are different.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.
In a possible design, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.
According to a ninth aspect, this application provides a data transmission apparatus. The data transmission apparatus may be a terminal device, an apparatus in the terminal device, or an apparatus that can be matched with the terminal device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the communication module is configured to obtain configuration information, where the configuration information indicates a demodulation reference signal DMRS corresponding to N3 terminal types, where N3 is an integer greater than or equal to 1; and
the processing module is configured to send uplink information based on a DMRS corresponding to a terminal type of a first terminal device by using the communication module, where the uplink information includes a message 3 in a random access procedure or uplink data that is based on a configured grant CG.

In the foregoing design, the terminal types are distinguished based on a DMRS included in the Msg 3, or the terminal types are distinguished based on a DMRS in a small packet transmission process, to report the terminal types. When demodulating physical layer information, a network may know a capability of a terminal device, for example, a receive antenna capability. In this way, the network may learn about an antenna capability of a terminal earlier. This helps properly schedule an Msg 4 resource for the terminal.
In a possible design, the uplink information is uplink information sent when the first terminal device is in a non-connected state.
In a possible design, demodulation reference signals DMRSs corresponding to different terminal types are different.
According to a tenth aspect, this application provides a data transmission apparatus. The data transmission apparatus may be a network device, an apparatus in the network device, or an apparatus that can be matched with the network device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the communication module is configured to receive uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different; and the processing module is configured to determine the type of the first terminal device based on the uplink information.

In the foregoing design, it is designed that PRUs used for different terminal types are different, and a network device may distinguish between types of terminal devices based on the uplink information. The network device may configure a related uplink and downlink scheduling parameter for each of different terminal types, to implement optimized and proper configuration. This helps improve system performance.

In a possible design, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related subsequent downlink scheduling parameter for the terminal device.

In a possible design, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information received from the terminal device when the first terminal device is in a non-connected state. Before the network device is accessed, the network device is enabled to learn about a status of the terminal device, so that the network device configures the related uplink and downlink scheduling parameter as early as possible. This helps improve system performance.

In a possible design, antenna capabilities corresponding to different terminal types are different.

According to an eleventh aspect, this application provides a data transmission apparatus. The data transmission apparatus may be a network device, an apparatus in the network device, or an apparatus that can be matched with the network device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the communication module is configured to receive uplink information of a first terminal device on a second resource, where the uplink information of the first terminal device is sent in a first transmission manner; and the uplink information includes a preamble, the preamble is a preamble corresponding to the first transmission manner, and physical uplink shared channel resource units PRUs corresponding to preambles corresponding to different transmission manners are different; or the first resource is a PRU corresponding to the first transmission manner, and PRUs corresponding to different transmission manners are different; and
the processing module is configured to determine the first transmission manner based on the uplink information.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.

In a possible design, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.

According to a twelfth aspect, this application provides a data transmission apparatus. The data transmission apparatus may be a network device, an apparatus in the network device, or an apparatus that can be matched with the network device for use. In a design, the data transmission apparatus may include a module that is in a one-to-one correspondence with the method/operation/step/action described in the first aspect. The module may be implemented by a hardware circuit, software, or a combination of a hardware circuit and software. In a design, the data transmission apparatus may include a processing module and a communication module. For example:

the communication module is configured to send configuration information, where the configuration information indicates a demodulation reference signal DMRS corresponding to N3 terminal types, where N3 is an integer greater than or equal to 1;
the communication module is further configured to receive uplink information based on a DMRS corresponding to a terminal type of a first terminal device, where the uplink information includes a message 3 in a random access procedure or uplink data that is based on a configured grant CG; and
the processing module is configured to determine the terminal type of the first terminal device based on the uplink information.

In the foregoing design, the terminal types are distinguished based on a DMRS included in the Msg 3, or the terminal types are distinguished based on a DMRS in a small packet transmission process, to report the terminal types. When demodulating physical layer information, a network may learn about a capability of a terminal device, for example, a receive antenna capability. In this way, the network may know an antenna capability of a terminal earlier. This helps properly schedule an Msg 4 resource for the terminal.

In a possible design, the uplink information is uplink information received when the first terminal device is in a non-connected state.

In a possible design, demodulation reference signals DMRSs corresponding to different terminal types are different.

According to a thirteenth aspect, an embodiment of this application provides a communication apparatus. The communication apparatus includes a processor, configured to implement the method according to any one of the first aspect to the third aspect. The communication apparatus may further include a memory, configured to store instructions and data. The memory is coupled to the processor, and when executing instructions stored in the memory, the processor may implement the method according to any one of the first aspect to the third aspect. The apparatus may further include a communication interface. The communication interface is used by the apparatus to communicate with another device. For example, the communication interface may be a transceiver, a circuit, a bus, a module, or another type of communication interface. The another device may be a network device. In a possible device, the apparatus includes:

a memory, configured to store program instructions; and
a processor, configured to send uplink information of a first terminal device on a first resource by using the communication interface, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a physical uplink shared channel resource unit PRU that can be used for a first terminal type, a type of the first terminal device is the first terminal type, and PRUs that can be used for different terminal types are different.

According to a fourteenth aspect, an embodiment of this application provides a communication apparatus. The communication apparatus includes a processor, configured to implement the method according to any one of the fourth aspect to the sixth aspect. The communication apparatus may further include a memory, configured to store instructions and data. The memory is coupled to the processor, and when executing instructions stored in the memory, the processor may implement the method according to any one of the fourth aspect to the sixth aspect. The apparatus may further include a communication interface. The communication interface is used by the apparatus to communicate with another device. For example, the communication interface may be a transceiver, a circuit, a bus, a module, or another type of communication interface. The another device may be a network device. In a possible device, the apparatus includes:

a memory, configured to store program instructions; and
a processor, configured to receive uplink information of a first terminal device on a first resource by using the communication interface, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different.

According to a fifteenth aspect, an embodiment of this application provides a communication system, including a terminal device and a network device. The terminal device has a function of performing the method according to any one of the first aspect to the third aspect of this application, and the network device has a function of performing the method according to any one of the fourth aspect to the sixth aspect of this application.

According to a sixteenth aspect, an embodiment of this application further provides a computer program. When the computer program is run on a computer, the computer is enabled to perform the method according to any one of the first aspect to the sixth aspect.

According to a seventeenth aspect, an embodiment of this application further provides a computer-readable storage medium. The computer-readable storage medium stores a computer program. When the computer program is executed by a computer, the computer is enabled to perform the method according to any one of the first aspect to the sixth aspect.

According to an eighteenth aspect, an embodiment of this application further provides a chip. The chip is configured to read a computer program stored in a memory, to perform the method according to any one of the first aspect to the sixth aspect.

According to a nineteenth aspect, an embodiment of this application further provides a chip system. The chip system includes a processor, configured to support a computer apparatus to implement the method according to any one of the first aspect to the sixth aspect. In a possible design, the chip system further includes a memory. The memory is configured to store a program and data that are necessary for the computer apparatus. The chip system may include a chip, or may include the chip and another discrete component.

**BRIEF DESCRIPTION OF DRAWINGS**

FIG. 1 is a schematic diagram of an architecture of a communication system according to an embodiment of this application;

FIG. 2 is a schematic flowchart of initial access according to an embodiment of this application;

FIG. 3 is a schematic flowchart of a two-step random access method according to an embodiment of this application;

FIG. 4 is a schematic diagram of a random access occasion RO configuration according to an embodiment of this application;

FIG. 5 is a schematic diagram of a correspondence between a first PRAHC and a PUSCH according to an embodiment of this application;

FIG. 6 is a schematic flowchart of a first data transmission method according to an embodiment of this application;

FIG. 7 is a schematic diagram of a correspondence between a second PRAHC and a PUSCH according to an embodiment of this application;

FIG. 8 is a schematic diagram of a correspondence between a third PRAHC and a PUSCH according to an embodiment of this application;

FIG. 9 is a schematic flowchart of a second data transmission method according to an embodiment of this application;

FIG. 10 is a schematic flowchart of a four-step random access method according to an embodiment of this application;

FIG. 11 is a schematic flowchart of a third data transmission method according to an embodiment of this application;

FIG. 12a is a schematic diagram of division of a DMRS port according to an embodiment of this application;

FIG. 12b is a schematic diagram of division of a DMRS port according to an embodiment of this application;

FIG. 13a is a schematic diagram of division of a DMRS port according to an embodiment of this application;

FIG. 13b is a schematic diagram of division of a DMRS port according to an embodiment of this application;

FIG. 14 is a schematic flowchart of a fourth data transmission method according to an embodiment of this application;

FIG. 15 is a schematic diagram of a DMRS configuration according to an embodiment of this application;

FIG. 16 is a schematic diagram of a structure of a data transmission apparatus according to an embodiment of this application; and

FIG. 17 is a schematic diagram of a structure of a communication apparatus according to an embodiment of this application.

**DESCRIPTION OF EMBODIMENTS**

Technical solutions provided in embodiments of this application may be applied to various communication systems, for example, a long term evolution (long term evolution, LTE) system, a 5th generation (5th generation, 5G) mobile communication system, a future mobile communication system, or a system integrating a plurality of communication systems. This is not limited in embodiments of this application. 5G may also be referred to as new radio (new radio, NR).

In embodiments of this application, a terminal device and a network device may support at least one of TDD, half-duplex (half duplex, HD)-FDD, and full-duplex (full duplex, FD)-FDD.

In embodiments of this application, "/" may represent an "or" relationship between associated objects. For example, A/B may represent A or B. "And/or" may be used to represent that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "at least one" may also be described as "one or more", and "a plurality of" may be "two, three, four, or more". This is not limited in this application.

The terms "include", "contain", and any other variants thereof mentioned in descriptions of embodiments of this application mean to cover the non-exclusive inclusion. For example, a process, a method, a system, a product, or a device that includes a series of steps or units is not limited to the listed steps or units, but optionally further includes another unlisted step or unit, or optionally further includes another step or unit that is inherent for the process, the method, the product, or the device.

The following describes in detail embodiments of this application with reference to accompanying drawings.

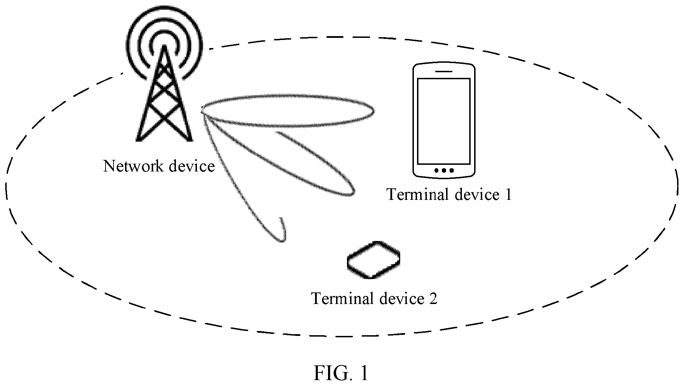

FIG. 1 shows an architecture of a communication system. The communication system includes a network device and at least one terminal device. For example, FIG. 1 shows two terminal devices: a terminal device 1 and a terminal device 2. An air interface resource may be used for wireless communication between the network device and the terminal device. The air interface resource may include at least one of a time domain resource, a frequency domain resource, a code resource, and a spatial resource.

The terminal device may perform uplink transmission in a non-connected state. For example, the terminal device may report a terminal type or a transmission manner (for example, a type of transmission data) of the terminal device to the network device by using uplink information sent in the non-connected state. In this case, the network device may distinguish between types of terminals or transmission manners of terminals based on the received uplink information, to configure a related uplink and downlink scheduling parameter for each terminal device in different cases. Optionally, the terminal device may perform uplink transmission in the non-connected state in a random access procedure of the terminal device, or in a process in which the terminal device performs small packet transmission based on a pre-granted resource. Before the network device is accessed, the network device is enabled to learn about a status of the terminal device, so that the network device configures the related uplink and downlink scheduling parameter as early as possible. This helps improve system performance.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission". The technical solutions may be used to perform wireless communication between a scheduling entity and a subordinate entity. A person skilled in the art may use the technical solutions provided in embodiments of this application to perform wireless communication between another scheduling entity and another subordinate entity, for example, wireless communication between a macro base station and a micro base station, for example, wireless communication between a first terminal and a second terminal.

The network device in embodiments of this application communicates with the terminal device, to provide a wireless access service for the terminal device. The network device may also be referred to as an access network device, a base station device, or a base station (base station, BS). The BS may be a device that is deployed in a radio access network and that can perform wireless communication with a terminal. The base station may be in a plurality of forms, for example, a macro base station, a micro base station, a relay station, and an access point. For example, the network device described below in embodiments of this application may be a base station in new radio (new radio, NR). The base station in 5G NR may also be referred to as a transmission reception point (transmission reception point, TRP) or a next generation NodeB (next generation NodeB, gNB). The network device described below in embodiments of this application may alternatively be an evolved NodeB (evolved NodeB, eNB or eNodeB) in a long term evolution (long term evolution, LTE) system.

In addition, it needs to be noted that, in embodiments of this application, a communication apparatus configured to implement a function of the network device may be a network device, a network device having some functions of a base station, or an apparatus that can support the network device to implement the function, for example, a chip system. The apparatus may be mounted onto the network device.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (such as in a steamship); or may be deployed in the air (such as on an airplane, a balloon, and a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus that can support the terminal to implement the function, for example, a chip system. The apparatus may be mounted onto the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal.

From a perspective of a communication service, the terminal device may be classified into a high-capability terminal and a low-capability terminal. For example, the high-capability terminal, for example, a Legacy terminal, is applicable to service scenarios such as enhanced mobile broadband (enhanced Mobile Broadband, eMBB) and/or ultra-reliable and low-latency communication (ultra-reliable and low-latency communication, URLLC). The low-capability terminal, for example, a reduced capability (reduced capability, REDCAP) terminal, is applicable to a service scenario of a massive machine type communication (massive Machine Type Communication, mMTC). Compared with the Legacy terminal, a main feature of the REDCAP terminal is that a terminal capability is reduced or limited. For example, a bandwidth capability of the REDCAP terminal is limited. For example, a maximum bandwidth of a bandwidth part (bandwidth part, BWP) that may be supported by the REDCAP terminal is reduced to 20 M. For another example, a signal processing capability (processing capability) of the REDCAP terminal is reduced, and a signal processing time (processing time) is increased. Specifically, for example, the processing time of the REDCAP terminal is increased to twice that of the Legacy terminal; and for another example, an antenna capability of the REDCAP terminal is reduced. For example, a quantity of antennas supported by the Legacy terminal is 2Tx4Rx (that is, two transmit antennas and four receive antennas), and a quantity of antennas supported by the REDCAP terminal is reduced to 1Tx2Rx (that is, one transmit antenna and two receive antennas) or 1Tx1Rx (that is, one transmit antenna and one receive antenna). A reduction in the bandwidth capability affects a frequency diversity gain of the terminal, and a reduction in the antenna capability affects a spatial diversity gain. Therefore, uplink and downlink coverage of the REDCAP terminal is reduced.

In addition, it needs to be noted that, in embodiments of this application, a communication apparatus configured to implement a function of the terminal device may be a terminal device, a terminal device having some functions of a terminal, or an apparatus that can support the terminal device to implement the function, for example, a chip system. The apparatus may be mounted onto the terminal device.

In conventional communication, a network device configures a parameter related to uplink and downlink scheduling for a terminal device indiscriminately, easily causing a waste of or a conflict between air interface resources, and affecting performance of a wireless communication system. In view of this, it may be considered that parameters are pertinently configured for different terminals or different transmission scenarios, to improve performance of a communication system.

The following describes in detail a solution in which the network device distinguishes between terminal types or transmission manners based on uplink transmission performed by the terminal device in a random access procedure.

First, an initial access procedure that needs to be performed by the terminal device before the random access procedure is described.

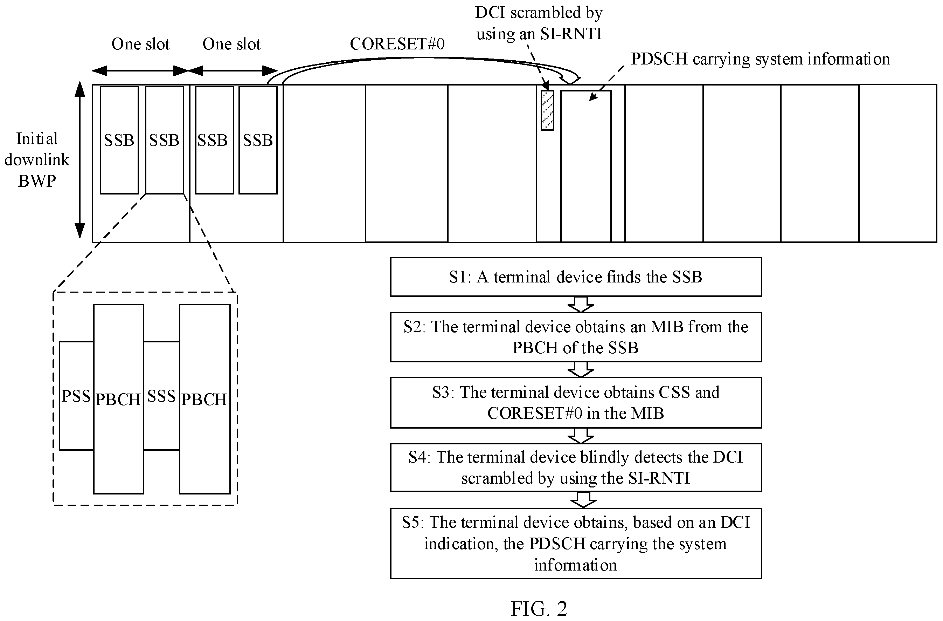

A main purpose of performing initial access (initial access) by a terminal is to achieve downlink synchronization with a base station and obtain system information of a cell in which the terminal is located. The system information may include a master information block (master information block, MIB), a system information block (system information block, SIB), and the like. In the initial access procedure, the terminal receives a BWP of a downlink channel that may be referred to as an initial downlink BWP (initial DL BWP). FIG. 2 shows the initial access procedure of the terminal, mainly including the following S1 to S5.

S1: The terminal device obtains a synchronization signal block (synchronization signal block, SSB) broadcast by the network device.

The SSB includes a primary synchronization signal (primary synchronization signal, PSS), a secondary synchronization signal (secondary synchronization signal, SSS), and a physical broadcast channel (physical broadcast channel, PBCH).

For example, the PSS and the SSS shown in FIG. 2 are two sequences. The PSS has three candidate patterns (pattern), and the SSS has 336 candidate patterns. The terminal device may obtain a PSS pattern through sequence detection, to determine $N_{ID}^{(2)}$, where $N_{ID}^{(2)} \in \{0,1,2\}$, and obtain an SSS pattern through sequence detection, to

determine $N_{ID}^{(1)}$, where $N_{ID}^{(1)} \in$ {0,1, ...,335}. The terminal device may obtain a cell ID through calculation according to Cell ID $= 336 * N_{ID}^{(2)} + N_{ID}^{(1)}$. The cell ID indicates a cell identifier, and the terminal device may determine, based on the Cell ID, a cell to be accessed by the terminal device.

S2: The terminal device obtains the master information block MIB from the PBCH.

The terminal determines common search space (Common Search Space, CSS), for example, two slots (slots) shown in FIG. 2, from pdcch-Config signaling in the MIB, and determines a control resource set CORESET#0. A bandwidth of the CORESET#0 is a bandwidth of the initial downlink BWP.

S3: The terminal device blindly detects, from a resource determined based on the CORESET#0 and the CSS, downlink control information DCI scrambled by using a system information radio network temporary identifier (system information radio network temporary identifier, SI-RNTI). The DCI is carried in a physical downlink control channel (physical downlink control channel, PDCCH).

S4: The terminal device obtains, based on an indication of the DCI, system information, for example, a SIB 1, in a slot in which the DCI is located.

The terminal device may obtain, from the SIB 1, configuration information of an uplink initial BWP, configuration information of a random access resource, configuration information of a paging resource, and/or the like. In addition to uplink and downlink initial BWP resources, the SIB may further indicate another resource used by the terminal to perform random access, for example, a physical random access channel (physical random access channel, PRACH) resource used to carry a preamble (preamble) (also referred to as a random access preamble), and/or a resource occupied for sending a message A (message A, Msg A).

S5: The terminal device receives a PDSCH scheduled by the DCI, where the PDSCH carries the system information.

Further, a method for the terminal device to perform random access includes a four-step access method and a two-step access method. The following separately describes in detail random access procedures related to the two-step access method and the four-step access method.

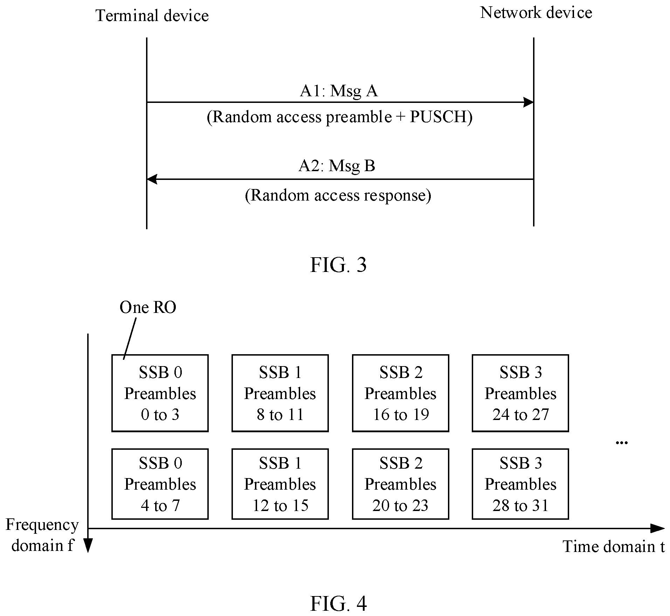

(1) The two-step access method may also be referred to as a 2-step RACH. FIG. 3 is a schematic flowchart of a two-step random access method, and the method includes the following two steps A1 and A2.

A1: The terminal device sends a random access preamble and a physical uplink shared channel (physical uplink shared channel, PUSCH) to the network device, or the terminal device sends the Msg A to the network device.

The random access preamble may also be referred to as a preamble (preamble), and there is a correspondence between a PRACH carrying the preamble (preamble) and a PUSCH, so that the base station adjusts timing advance (timing advance, TA) by detecting the preamble to demodulate the PUSCH of the Msg A. Optionally, a time-frequency resource includes one or more occasions for sending the PRACH (PRACH occasion, RO). One RO corresponds to one or more preambles. To be specific, the terminal may send the PRACH to the network device in the RO, and the PRACH may carry a preamble in the one or more preambles. One RO corresponds to one or more physical uplink shared channel resource units (PUSCH resource units, PRUs), and the PUSCH PRU is used to transmit the PUSCH.

A correspondence between the RO and the preamble may be configured by the network device in the foregoing system information SIB. In this case, the terminal device may obtain, in the initial access procedure, the SIB based on the SSB broadcast by the network device, to learn about the correspondence between the RO and the preamble based on the SIB. Specifically, specific information such as an RO parameter, a quantity of preambles, and a mapping relationship between the preamble and the SSB that are in the two-step random access method may be configured in the SIB. For example, the following RRC parameter MsgA-SSB-PerRACH-OccasionAndCB-PreamblesPerSSB s is used for configuration:

MsgA-SSB-PerRACH-OccasionAndCB-PreamblesPerSSB-r16     CHOICE {

        oneEighth             ENUMERATED

{n4, n8, n12, n16, n20, n24, n28, n32, n36, n40, n44, n48, n52, n56, n60, n64},

        oneFourth             ENUMERATED

{n4, n8, n12, n16, n20, n24, n28, n32, n36, n40, n44, n48, n52, n56, n60, n64},

        oneHalf              ENUMERATED

{n4, n8, n12, n16, n20, n24, n28, n32, n36, n40, n44, n48, n52, n56, n60, n64},

        one               ENUMERATED

{n4, n8, n12, n16, n20, n24, n28, n32, n36, n40, n44, n48, n52, n56, n60, n64},

        two               ENUMERATED

{n4, n8, n12, n16, n20, n24, n28, n32},

        four               INTEGER (1..16),

        eight              INTEGER (1..8),

        sixteen           INTEGER (1..4)

    }

The RRC parameter MsgA-SSB-PerRACH-OccasionAndCB-PreamblesPerSSB specifies the quantity of preambles and a quantity of corresponding SSBs. The parameters on the left, oneEighth, oneFourth, oneHalf, one, two, four, eight, and sixteen, indicate a quantity of SSBs corresponding to one RO. If the quantity of SSBs corresponding to one RO is less than or equal to 1, it indicates that one SSB corresponds to one or more ROs. For example, oneEighth indicates that one SSB corresponds to eight ROs. If the quantity of SSBs corresponding to one RO is greater than 1, it indicates that one RO corresponds to a plurality of SSBs. For example, two indicates that one RO corresponds to two SSBs. When the quantity of SSBs corresponding to one RO is less than or equal to 1, the parameter on the right {n4, n8, n12, n16, n20, n24, n28, n32, n36, n40, n44, n48, n52, n56, n60, n64} indicates a quantity of preambles corresponding to each RO. For example, when each RO corresponds to only one SSB, to be specific, a parameter value on the left is one, the parameter on the right is set to n4, and it indicates that each RO corresponds to four preambles. When the quantity of SSBs corresponding to one RO is greater than 1, to be specific, a parameter value on the left is two, four, eight, sixteen, and the like, the parameter on the right INTEGER (1..16) indicates a quantity of preambles corresponding to each SSB in each RO. For example, when each RO corresponds to a plurality of SSBs, the parameter on the right is set to INTEGER 16, and it indicates that each SSB in each RO corresponds to 16 preambles.

For example, as shown in FIG. 4, if there are four SSBs (SSB 0 to SSB 3) in total in a cell, an RO is configured as 2 FDMed (frequency division multiplexed). To be specific, there are ROs corresponding to two frequency positions per unit of time, and the parameter MsgA-SSB-PerRACH-OccasionAndCB-PreamblesPerSSB is configured as oneHalf and n4, the ROs of the cell and correspondences between the ROs and the SSBs and between the ROs and the preambles are as follows: oneHalf indicates that one SSB corresponds to two ROs. Specifically, as shown in FIG. 4, two consecutive ROs correspond to one SSB. It may be understood that an RO sorting rule is sorting by frequency domain first and then by time domain. To be specific, the ROs are sorted first by frequency domain, and then by time domain. Therefore, two consecutive ROs in FIG. 4 may be located in same time domain, but do not overlap each other and are consecutive in frequency domain. n4 indicates that each RO corresponds to four preambles, and the terminal device may send, in a specific RO, one preamble corresponding to the RO.

Optionally, all preambles in one SSB mapping period may be uniformly numbered. It may be understood that one SSB mapping period is a period in which all SSBs sent in a current serving cell are mapped. As shown in FIG. 4, one SSB mapping period includes eight ROs, and each RO corresponds to four preambles. In this case, $T_{preamble}$ = RO# * preambles# = 8 * 4=32 may be obtained through calculation, where "#" indicates a quantity, RO# indicates that a quantity of ROs is 8, and preambles# indicates that a quantity of preambles is 4. Preambles are numbered from 0 to 31 in sequence. In this case, the RO sorting rule is used. Refer to FIG. 4. The first RO in one SSB mapping period corresponds to four preambles whose preamble numbers are 0 to 3 and that are denoted as preambles 0 to 3 in FIG.

4. The second RO corresponds to four preambles whose preamble numbers are 4 to 7 and that are denoted as preambles 4 to 7in FIG. 4. The third RO corresponds to four preambles whose preamble numbers are 8 to 11 and that are denoted as preambles 8 to 11 FIG. 4. By analogy, the last RO, that is, the eighth RO, corresponds to four preambles whose preamble numbers are 28 to 31 and that are denoted as preambles 28 to 31 FIG. 4.

Further, the PUSCH for the Msg A may include one or more PUSCH occasions (PUSCH occasions), and one PUSCH occasion occupies one time-frequency resource that may also be understood as a time-frequency resource of one PUSCH. A plurality of reference signals such as demodulation reference signals (demodulation reference signal, DMRS) may be configured in one PUSCH occasion. It may be understood that the DMRS in this embodiment of this application is a DMRS of a PUSCH, and the DMRS may be used to demodulate the PUSCH. For description from a perspective of one or more DMRSs configured for one PUSCH occasion, one PUSCH occasion may correspond to one or more physical uplink shared channel resource units (PUSCH resource units, PRUs), and DMRSs corresponding to different PRUs are different. For example, two DMRSs are configured in one PUSCH occasion, and in this case, one PUSCH occasion corresponds to two PRUs. Alternatively, it may be understood that one PRU corresponds to one PUSCH occasion, and one DMRS is used when the PUSCH is transmitted in the PUSCH occasion.

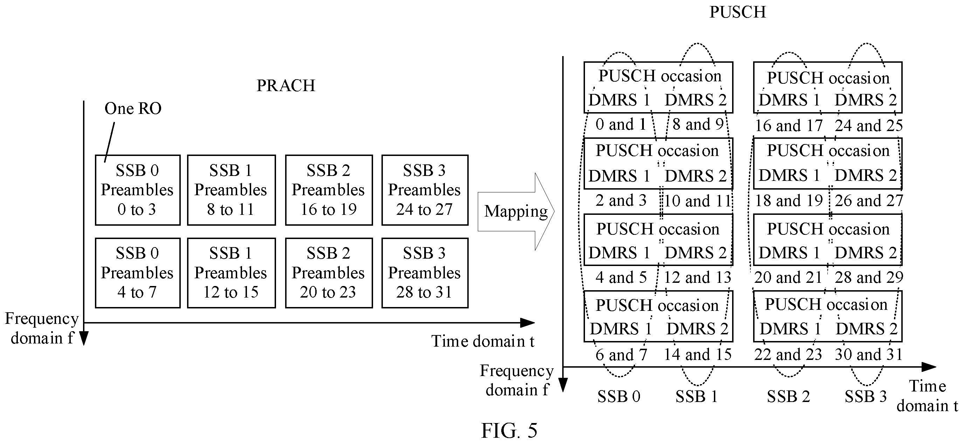

For example, FIG. 5 shows a correspondence between an RO of a PRACH and a PRU of a PUSCH based on FIG. 4: One PUSCH mapping period includes four frequency division multiplexing, and two units of time, that is, eight PUSCH occasions. Two DMRSs (a DMRS 1 and a DMRS 2) are configured in each PUSCH occasion, to be specific, each PUSCH occasion corresponds to two PRUs.

A quantity of PRUs included in one PUSCH mapping period is: $T_{PUSCH}$ = PUSCH occasions# * DMRS# = 8*2 = 16. A quantity of preambles corresponding to each PRU is denoted as: $N_{preamble} = ceil(T_{preamble}/T_{PUSCH}) = 2$. A ceil operation is a rounding down operation.

Optionally, a PRU sorting rule is used: sorting by frequency domain first, then by code domain (different DMRSs), and finally by time domain. To be specific, the PRUs are sorted by frequency domain first, then by code domain (to be specific, different DMRSs are traversed), and finally by time domain. In this case, FIG. 5 shows that preambles 0 and 1 (in the first RO) correspond to the first PRU, preambles 2 and 3 correspond to the second PRU. By analogy, preambles 30 and 31 correspond to the sixteenth PRU. Further, FIG. 4 shows that an SSB 0 corresponds to preambles 0 to 7. In this case, four PRUs corresponding to the preambles 0 to 7 may be mapped to the SSB 0, four PRUs corresponding to preambles 8 to 15 may be mapped to an SSB 1, four PRUs corresponding to preambles 16 to 23 may be mapped to an SSB 2, and four PRUs corresponding to preambles 24 to 31 may be mapped to an SSB 3.

In addition, the terminal device calculates an MsgB-RNTI based on a random access sending occasion (RO), so that the terminal device subsequently demodulates an Msg B.

A2: After receiving the random access preamble and the PUSCH, the network device sends a random access response, also referred to as the Msg B, to the terminal.

The base station calculates the MsgB-RNTI that is the same as the MsgB-RNTI in A1, and scrambles, by using the MsgB-RNTI, DCI used for scheduling the random access response. The random access response includes a contention resolution message, to be specific, includes a unique identifier of a terminal to specify a terminal device that succeeds in accessing. The random access response further includes a C-RNTI allocated to the terminal device and TA of the terminal device. Another terminal device that fails in accessing may re-initiate two-step random access, or may initiate four-step random access after a plurality of attempts fail.

Further, after receiving the Msg B, if the PDSCH is correctly demodulated, the terminal feeds back an acknowledge character (Acknowledge character, ACK) to the base station by using the PUCCH based on PUCCH indication information in the DCI scrambled by the MsgB-RNTI in A2. If the PDSCH is not correctly demodulated, the terminal feeds back a negative acknowledge character (Negative Acknowledge character, NACK) to the base station by using the PUCCH. If the terminal does not identify DCI for scheduling an Msg B PDSCH, the ACK/NACK is not sent. If the base station does not receive the ACK/NACK within a time window, the Msg B may be resent.

With reference to Solution 1, the following describes in detail a manner of reporting a terminal type in a two-step random access procedure.

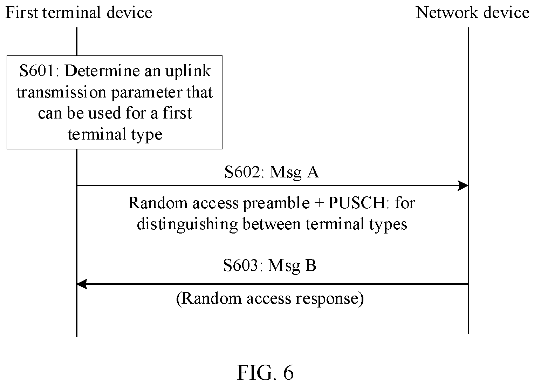

Solution 1: FIG. 6 shows a data transmission method, and the method mainly includes the following processes.

S601: A first terminal device determines an uplink transmission parameter that can be used for a first terminal type, where a type of the first terminal device is the first terminal type, uplink transmission parameters that can be used for different terminal types are different, and the uplink transmission parameter includes at least one of the following: a preamble, a reference signal, and a resource (for example, the foregoing PUSCH occasion) that may be occupied for transmitting a PUSCH. The reference signal may be a physical uplink shared channel demodulation reference signal PUSCH DMRS, referred to as a DMRS below.

Different terminal types may be terminal devices with different capabilities. For example, antenna capabilities corresponding to different terminal types are different. The terminal type includes a high-capability terminal and a low-capability terminal. The first terminal type is the high-capability terminal or the low-capability terminal. Alternatively, the terminal type includes terminals that support different receive antennas. For example, the terminal type includes a 4Rx terminal that supports four receive antennas, a 2Rx terminal that supports two receive antennas, and a 1Rx terminal that supports one receive antenna. In this case, the first terminal type is one of the 4Rx terminal, the 2Rx terminal, and the 1Rx terminal. Alternatively, the terminal type includes at least one of the following: the high-capability terminal, the low-capability terminal, terminals that support different receive antennas in the high-capability terminal, and terminals that support different receive antennas in the low-capability terminal. For example, the terminal type includes the high-capability terminal, the 1Rx terminal in the low-capability terminal, and the 2Rx terminal in the low-capability terminal. In this case, the first terminal type is one of the high-capability terminal, the 1Rx terminal in the low-capability terminal, and the 2Rx terminal in the low-capability terminal.

In an optional implementation, a correspondence between a terminal type and an uplink transmission parameter that can be used for the terminal type may be set by predefining. In this case, the terminal device may determine, based on the predefined correspondence and a related configuration of an uplink transmission parameter obtained by an SIB in an initial access procedure, the uplink transmission parameter that can be used for the first terminal type. Alternatively, in another optional implementation, a network device may indicate, in the system information SIB, the correspondence between the terminal type and the uplink transmission parameter that can be used for the terminal type. Based on this, the first terminal device may determine, based on an indication in the SIB in the initial access procedure, the first terminal type to which the first terminal device belongs, and obtain the uplink transmission parameter that can be used for the first terminal type.

With reference to FIG. 5, FIG. 7, and FIG. 8, the following describes the correspondence between the terminal type and the uplink transmission parameter that can be used for the terminal type.

Case 1: The uplink transmission parameter includes a preamble, and preambles that can be used for different terminal types are different. In addition, DMRSs that can be used for different terminal types may be the same or may be different. This is not limited in this embodiment of this application.

For example, the terminal type is divided into two types such as the 1Rx terminal in the low-capability terminal and the 2Rx terminal in the low-capability terminal. Some of preambles in one PRACH mapping period may be set as preambles that can be used for the 1Rx terminal, and remaining preambles in the PRACH mapping period may be set as preambles that can be used for the 2Rx terminal. To be specific, terminal types may be distinguished by using preamble numbers. For example, for 32 preambles with consecutive numbers in one PRACH mapping period shown in FIG. 5, some of the 32 preambles may be set as preambles that can be used for the 1Rx terminal, and remaining preambles in the 32 preambles may be set as preambles that can be used for the 2Rx. The terminal types are distinguished by using the preambles, so that before demodulating the PUSCH, a network device side learns about an antenna capability of the terminal device as early as possible. This helps properly schedule a resource related to the Msg B for the terminal device.

Optionally, preambles with different numbers may be distinguished by using different root sequences or different cyclic shifts of a same root sequence.

Optionally, a proportion of a quantity of preambles allocated to a device type in a cell may be determined based on a quantity of terminals of different types in the cell. For example, assuming that in two terminal types, a quantity of 1Rx terminals is three times a quantity of 2Rx terminals, for the 32 preambles shown in FIG. 5, it may be set that the 1Rx terminals can use 24 preambles in the 32 preambles, and the 2Rx terminals can use 8 preambles in the 32 preambles.

Optionally, based on the foregoing correspondence between the PARCH and the PUSCH in the initial access procedure, one RO may include a preamble that can be used for N1 terminal types, where N1 is an integer greater than or equal to 1. However, PRUs corresponding to preambles that can be used for different terminal types are different. For example, for the 32 preambles shown in FIG. 5, it may be set that the 1Rx terminals can use preambles 0 to 5, 8 to 13, 16 to 21, and 24 to 29, and the 2Rx terminals can use preambles 6 and 7, 14 and 15, 22 and 23, and 30 and 31. In this way, a conflict caused when PUSCHs for different terminal types occupy a same PRU can be avoided. This helps the network device quickly demodulate the PUSCH and subsequently properly configure an Msg B resource for the terminal, and can improve system performance.

Case 2: The uplink transmission parameter includes a DMRS, and DMRSs that can be used for different terminal types are different. Time domain positions occupied by different DMRSs are different; frequency domain positions occupied by different DMRSs are different; sequences used for different DMRSs are different; and/or DMRSs implemented by multiplexing DMRS ports by using different orthogonal cover codes (orthogonal cover codes, OCCs) are different. In addition, preambles that can be used for different terminal types may be the same or may be different. This is not limited in this embodiment of this application.

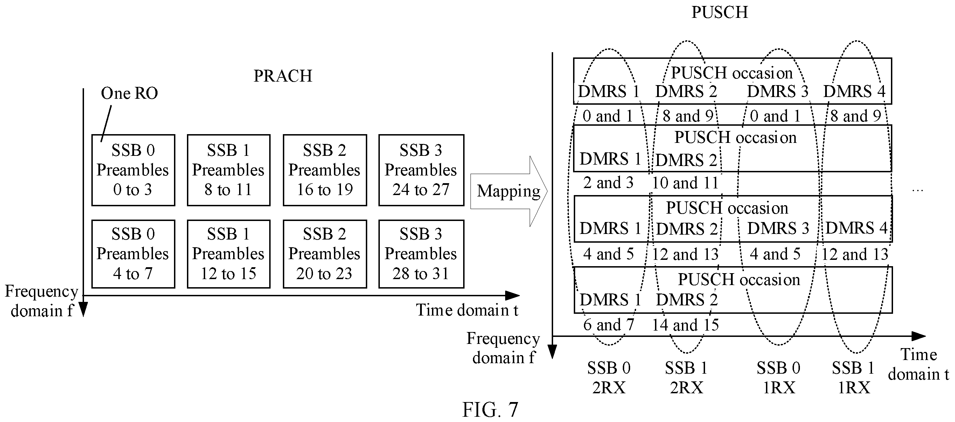

For example, the terminal type is divided into two types such as the 1Rx terminal in the low-capability terminal and the 2Rx terminal in the low-capability terminal. For a plurality of DMRSs configured in one PUSCH mapping period, the 1Rx terminal can use some DMRSs in the plurality of DMRSs, and the 2Rx terminal can use remaining DMRSs in the plurality of DMRSs. To be specific, DMRSs that can be used by the 1Rx terminal and the 2Rx terminal are different. FIG. 7 shows four PUSCH occasions in one PUSCH mapping period. According to a sorting rule, four DMRSs are configured in a first PUSCH occasion, that is, a DMRS 1, a DMRS 2, a DMRS 3, and a DMRS 4. Two DMRSs are configured in a second PUSCH occasion, that is, a DMRS 1 and a DMRS 2. Four DMRSs are configured in a third PUSCH occasion, that is, a DMRS 1, a DMRS 2, a DMRS 3, and a DMRS 4. Two DMRSs are configured in a fourth PUSCH occasion, that is, a DMRS 1 and a DMRS 2. It may be set that the 2Rx terminal can use the DMRS 1 and the DMRS 2, and the 1Rx terminal can use the DMRS 3 and the DMRS 4. Because PRUs corresponding to different DMRSs are different, distinguishing between terminal types by using the DMRSs can avoid a conflict caused when PUSCHs for different terminal types occupy a same PRU. This helps the network device quickly demodulate the PUSCH and subsequently deliver the Msg B, and can improve system performance. In addition, the terminal types are distinguished by using the DMRSs, so that before demodulating the PUSCH, a network device side learns about an antenna capability of the terminal device as early as possible. This helps properly schedule a resource related to the Msg B for the terminal device. In addition, FIG. 7 further shows that one PRACH mapping period includes 32 preambles, and the terminal types are not distinguished. The 1Rx terminal and the 2Rx terminal can use a same preamble in the 32 preambles.

Case 3: The uplink transmission parameter includes a PUSCH occasion, and PUSCH occasions that can be used for different terminal types are different. In addition, the preambles that can be used for different terminal types may be the same or may be different, and the DMRSs that can be used for different terminal types may be the same or may be different. This is not limited in this embodiment of this application.

Optionally, different terminal types are terminals having different receive antenna capabilities. The terminal types are distinguished by using the PUSCH occasion, so that before demodulating the PUSCH, a network device side learns about an antenna capability of the terminal device as early as possible. This helps properly schedule a resource related to the Msg B for the terminal device.

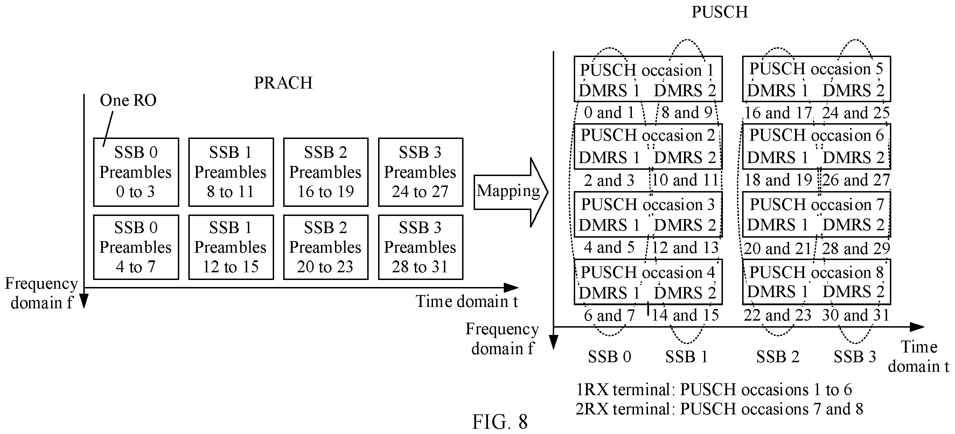

For example, the terminal type is divided into two types such as the 1Rx terminal in the low-capability terminal and the 2Rx terminal in the low-capability terminal. FIG. 8 shows eight PUSCH occasions in one PUSCH mapping period. It may be set that the 2Rx terminal can use some PUSCH occasions in the eight PUSCH occasions, and the 1Rx terminal can use remaining PUSCH occasions in the eight PUSCH occasions. Optionally, a proportion of a quantity of PUSCH occasions allocated to a device type in a cell may be determined based on a quantity of terminals of different types in the cell. For example, assuming that in two terminal types, a quantity of 1Rx terminals is three times a quantity of 2Rx terminals, for eight PUSCH occasions shown in FIG. 8, it may be set that the 1Rx terminals can use six PUSCH occasions such as PUSCH occasions 1 to 6 in the eight PUSCH occasions, and the 2Rx terminals can use two PUSCH occasions such as PUSCH occasions 7 and 8 in the eight PUSCH occasions. Alternatively, it may be understood that, in one PUSCH mapping period, one set of PUSCH occasions is configured for each terminal type, and a PUSCH occasion corresponding to a terminal type is not configured repeatedly for another terminal type. For example, the terminal type is divided into two types such as the 1Rx terminal in the low-capability terminal and the 2Rx terminal in the low-capability terminal. A set of PUSCH occasions may be separately configured for the 1Rx terminal, for example, the PUSCH occasions 1 to 6 shown in FIG. 8, and a set of PUSCH occasions may be separately configured for the 2Rx terminal, for example, the PUSCH occasions 7 and 8 shown in FIG. 8.

In addition, FIG. 8 further shows that two DMRSs are configured in each PUSCH occasion, which are a DMRS1 and a DMRS2 separately. The 1Rx terminal and the 2Rx terminal can use a same DMRS. One PRACH mapping period includes 32 preambles, and the terminal types are not distinguished. The 1Rx terminal and the 2Rx terminal can use a same preamble in the 32 preambles.

Optionally, the network device may configure one first reference signal received power (reference signal received power, RSRP) threshold in the SIB. When RSRP of an SSB measured by the 1Rx terminal is greater than the first RSRP threshold, the 1Rx terminal may be allowed to use a resource of the 2Rx terminal, and does not need to report an antenna capability to the network device. When the network device does not configure an access resource of the 1Rx in the SIB, it is considered that the network device does not allow access of the 1Rx terminal. In this case, it may be understood that the network device does not need to distinguish between the 1Rx and the 2Rx, and the two terminal devices may share an access resource.

S602: The first terminal device sends uplink information of a first terminal on a first resource, where the uplink information may be used for the network device to determine a type of the first terminal device. The uplink information is uplink information sent when the first terminal is in a non-connected state. In the two-step random access method, the uplink information may be information sent by being carried in an Msg A.

The first resource is related to an SSB obtained by the first terminal device in the initial access procedure, and the first resource includes an RO carrying a preamble and/or a PUSCH occasion carrying uplink data.

In a first optional implementation, the uplink information includes a preamble, the preamble is a preamble that is in the first resource and that can be used for a first terminal type, the first resource includes the RO carrying the preamble, the first resource corresponds to a preamble that can be used for N1 terminal types, where N1 is an integer greater than or equal to 1, and physical uplink shared channel resource units PRUs corresponding to preambles that can be used for different terminal types are different.

Optionally, the first terminal device may select a preamble to be sent in the following manner: When obtaining at least one SSB broadcast by the network device, the first terminal device measures reference signal received power (reference signal received power, RSRP) of each SSB; and the first terminal device selects, based on a measurement result, from the at least one SSB, an SSB that exceeds a second RSRP threshold. For example, assuming that the SSB0 shown in FIG. 5 exceeds the second RSRP threshold, the terminal device may send, in an RO corresponding to the SSB0, a preamble (preamble) corresponding to the RO, for example, a preamble 2, and send uplink data based on a PRU corresponding to the preamble. It should be noted that the second RSRP threshold herein may be the same as or different from the first RSRP threshold mentioned above.

Optionally, the first resource is corresponding to one synchronization signal block, the synchronization signal block may be associated with X preambles with consecutive numbers, and the X preambles include a preamble that can be used for N2 terminal types, where N2 is greater than or equal to 1. If the synchronization signal block corresponds to a plurality of ROs, there are preambles that can be used for N1 terminal types in the ROs, where N2 is an integer greater than or equal to N1. Numbers of preambles that can be used for a same terminal type in the X preambles are consecutive. For example, in the eight preambles associated with the SSB0 in FIG. 5 described in Case 1 in S601, preambles that can be used by the 1Rx terminal are preambles 0 to 3 and preambles 4 and 5, and preambles that can be used by the 2Rx terminal are preambles 6 and 7. In this way, preambles selected by terminals of a same type may be centralized in a same RO, so that same MsgB-RNTIs are used to obtain DCI and demodulate an MsgB PDSCH. In this way, the network device may pertinently configure a PDSCH resource based on the terminal type.

In a second optional implementation, the first resource is a PRU that can be used for the first terminal type, a type of the first terminal device is the first terminal type, PRUs that can be used for different terminal types are different, and DMRSs corresponding to the PRUs that can be used for different terminal types are different. Time domain positions occupied by different DMRSs are different; frequency domain positions occupied by different DMRSs are different; sequences used for different DMRSs are different; and/o DMRSs implemented by multiplexing DMRS ports by using different OCCs are different.

In a third optional implementation, the first resource is a PRU that can be used for the first terminal type, a type of the first terminal device is the first terminal type, PRUs that can be used for different terminal types are different, and physical uplink shared channel PUSCH time-frequency resources corresponding to the PRUs that can be used for different terminal types are different, for example, PUSCH occasions that can be used for different terminal types are different.

S603: After receiving the Msg A, that is, the preamble and the PUSCH, the network device sends a random access response, also referred to as an Msg B, to the terminal. For details, refer to A2 for implementation. Details are not described in this embodiment of this application.

With reference to Solution 2, the following describes in detail a manner of distinguishing between transmission manners in a two-step random access procedure.

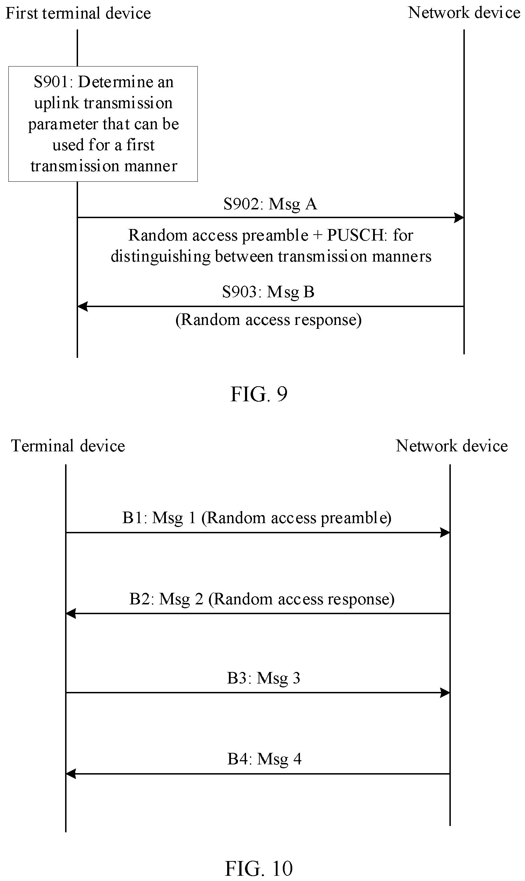

Solution 2: FIG. 9 shows a data transmission method, and the method mainly includes the following processes.

S901: A first terminal device determines an uplink transmission parameter that can be used for a first transmission manner, uplink transmission parameters that can be used for different transmission manners are different, and the uplink transmission parameter includes at least one of the following: a preamble, a PUSCH DMRS (DMRS for short in the following), and a resource that can be occupied for transmitting a PUSCH (for example, the foregoing PUSCH occasion).

Optionally, the first transmission manner is random access carrying a small data packet or random access without carrying a small data packet. If the first terminal device needs to implement small packet transmission in the two-step random access procedure, the first transmission manner is the random access carrying the small data packet. If the first terminal device performs a conventional two-step random access procedure, the first transmission manner is the random access without carrying the small data packet. In other words, it may be understood that the conventional two-step random access and the random access carrying the small data packet may be distinguished based on the uplink transmission parameter. The small data packet is uplink data sent by a terminal device in a non-connected state. A size of the small data packet is less than a preset threshold or may be sent in a limited time unit (for example, one slot or two slots), for example, the size of the small data packet may be 300 KB. If the first transmission manner is the random access carrying the small data packet, a PUSCH in an Msg A includes the small data packet.

In an optional implementation, a correspondence between a transmission manner and an uplink transmission parameter that can be used for the transmission manner may be set by predefining. In this case, the terminal device may determine, based on the predefined correspondence and a related configuration of an uplink transmission parameter obtained by an SIB in an initial access procedure, the uplink transmission parameter that can be used for the first transmission manner. Alternatively, in another optional implementation, a network device may indicate, in the system information SIB, the correspondence between the transmission manner and the uplink transmission parameter that can be used for the transmission manner. Based on this, the first terminal device may determine, based on an indication in the SIB in the initial access procedure, the first transmission manner, and obtain the uplink transmission parameter that can be used for the first transmission manner.

For the correspondence between the transmission manner and the uplink transmission parameter that can be used for the transmission manner, refer to Case 1 to Case 3 in S601 for understanding and implementation. Details are not described in this embodiment of this application again.

S902: Send uplink information of a first terminal on a second resource by using the first transmission manner, where the uplink information may be used for the network device to determine the first transmission manner. The uplink information is uplink information sent when the first terminal is in a non-connected state. In the two-step random access method, the uplink information may be information sent by being carried in an Msg A.

The second resource is related to an SSB obtained by the first terminal device in the initial access procedure, and the second resource includes an RO carrying a preamble and a PUSCH occasion carrying uplink data.

In a first optional implementation, the uplink information includes a preamble, the preamble is a preamble that is in the second resource and that can be used for the first transmission manner, the second resource includes an RO carrying the preamble, the second resource includes a preamble that can be used for N1 transmission manners, where N1 is an integer greater than or equal to 1, physical uplink shared channel resource units PRUs corresponding to preambles that can be used for different transmission manners are different, and a same PRU carries uplink data corresponding to a same transmission manner.

Optionally, the first terminal device may select a preamble to be sent in the following manner: When obtaining at least one SSB broadcast by the network device, the first terminal device measures RSRP of each SSB; and the first terminal device selects, based on a measurement result, from the at least one SSB, an SSB that exceeds a second RSRP threshold. For example, assuming that the SSB0 shown in FIG. 5 exceeds the second RSRP threshold, the terminal device may send, in an RO corresponding to the SSB0, a preamble (preamble) corresponding to the RO, for example, a preamble 2, and send uplink data based on a PRU corresponding to the preamble.

Optionally, the second resource corresponds to one synchronization signal block, the synchronization signal block may be associated with X preambles with consecutive numbers, and the X preambles include a preamble that can be used for N2 transmission manners, where N2 is greater than or equal to 1. If the synchronization signal block corresponds to a plurality of ROs, there are preambles that can be used for N1 transmission manners in the ROs, where N2 is an integer greater than or equal to N1. Numbers of preambles that are in the X preambles and that can be used for a same transmission manner are consecutive. For example, in FIG. 5, in eight preambles associated with the SSB0, preambles that can be used for the first transmission manner are preambles 0 to 3 and preambles 4 and 5, or preambles that can be used for the first transmission manner are preambles 6 and 7. Because different transmission manners such as the random access carrying the small data packet and the random access without carrying the small data packet may use different transport blocks of different sizes, parameters of different transmission manners differ greatly. In this way, PRUs corresponding to a same transmission manner may be centralized in a same PUSCH occasion, to avoid a case in which different transmission manners interchangeably use PUSCH occasions. Therefore, PUSCHs corresponding to different transmission manners do not overlap, which is relatively proper.

In a second optional implementation, the second resource is a PRU that can be used for the first transmission manner, PRUs that can be used for different transmission manners are different, and demodulation reference signals DMRSs corresponding to the PRUs that can be used for different transmission manners are different.

In a third optional implementation, the second resource is a PRU that can be used for the first transmission manner, PRUs that can be used for different transmission manners are different, and physical uplink shared channel PUSCH time-frequency resources corresponding to the PRUs that can be used for different transmission manners are different, for example, PUSCH occasions that can be used for different transmission manners are different.

S903: After receiving the Msg A, that is, the preamble and the PUSCH, the network device sends a random access response, also referred to as an Msg B, to the terminal. For details, refer to A2 for implementation. Details are not described in this embodiment of this application.

In this embodiment of this application, small packet transmission may be implemented in a two-step random access procedure, to avoid additional signaling overheads and energy consumption overheads caused when UE first enters a connected state and then sends a small packet. In addition, it may be distinguished, based on the preamble, the DMRS, or the PUSCH occasion, whether to perform conventional two-step random access or perform the random access carrying the small packet transmission, so that a network side pertinently configures uplink and downlink scheduling parameters for different transmission manners.

(2). The four-step access method may also be referred to as a 4-step RACH. FIG. 10 is a schematic flowchart of a four-step random access method. The method includes the following four steps B1 to B4.

B1: A terminal sends a preamble (Preamble), referred to as a random access preamble or a message 1 (Msg 1), to a base station on a physical random access channel (physical random access channel, PRACH).

The preamble is a sequence. A function of the preamble is to notify the base station that there is a random access request, and enable the base station to estimate a transmission latency between the terminal and the base station, so that the base station calibrates uplink timing (uplink timing) of the terminal, and notifies the terminal of calibration information through a timing advance (timing advance, TA) instruction.

In addition, the terminal may further calculate a random access radio network temporary identifier (random access radio network temporary identifier, RA-RNTI) based on a sending occasion (PRACH occasion, RO) of the preamble. One RO may correspond to one or more preambles. The sending occasion RO of the two-step random access and the sending occasion RO of the four-step random access may be shared or not shared.

B2: After detecting the preamble sent by the terminal, the base station sends a message 2 (Msg 2) to the terminal, where the message 2 may also be understood as a random access response (random access response, RAR) message.

Specifically, the base station calculates an RA-RNTI that is the same as the RA-RNTI in B1, and scrambles downlink control information (downlink control information, DCI) by using the RA-RNTI, where the DCI is used to schedule a physical downlink shared channel (physical downlink shared channel, PDSCH) carrying a random access response (random access response, RAR). Content of the RAR includes numbers (numbers) of preambles received in B1, uplink timing advance (timing advance, TA) information, uplink resource grant (uplink grant, UL grant) information, and a temporary cell-radio network temporary identifier (temporary cell-RNTI, TC-RNTI) that correspond to the numbers of the preambles, and the like.

B3: The terminal receives the RAR.

If the numbers of the preambles in the RAR include a number of the preamble sent by the terminal to the base station in B1, the terminal considers that the RAR is a random access response for the terminal, determines, based on UL grant indication information corresponding to the number of the preamble in the RAR, a PUSCH resource used by the terminal to send a message 3 (Msg 3), and after adjusting the TA, sends an uplink message Msg3 based on the PUSCH resource, where the Msg 3 carries a unique identifier of the terminal. The terminal may initiate a radio resource control (radio resource control, RRC) connection request in the Msg 3.

B4: The base station receives the Msg 3 sent by the terminal, and feeds back a contention resolution (contention resolution) message, also referred to as a message 4 (Msg 4), to the terminal that succeeds in accessing.

DCI used for scheduling the contention resolution message is scrambled by using the temporary cell-radio network temporary identifier TC-RNTI allocated in B2. The base station carries the unique identifier of the terminal in the Msg 3 in the contention resolution message to specify the terminal that succeeds in accessing the network, and another terminal that fails in accessing initiates random access again. The base station may perform RRC configuration on the terminal by using the Msg 4. The DCI scrambled by using the TC-RNTI carries uplink control channel (physical uplink control channel, PUCCH) indication information used to feed back an ACK/NACK.

Further, after receiving the Msg 4, if the terminal correctly demodulates the PDSCH, the terminal feeds back the ACK to the base station by using a PUCCH according to the PUCCH indication information in the DCI scrambled by using the TC-RNTI in B4. If the terminal fails to correctly demodulate the PDSCH, the terminal feeds back the NACK to the base station by using a PUCCH. If the terminal does not identify DCI scheduling an Msg 4 PDSCH, the ACK/NACK is not sent. If the base station does not receive the ACK/NACK within a time window, the Msg 4 may be resent.

With reference to Solution 3, the following describes in detail a manner of reporting a terminal type in a four-step random access procedure.

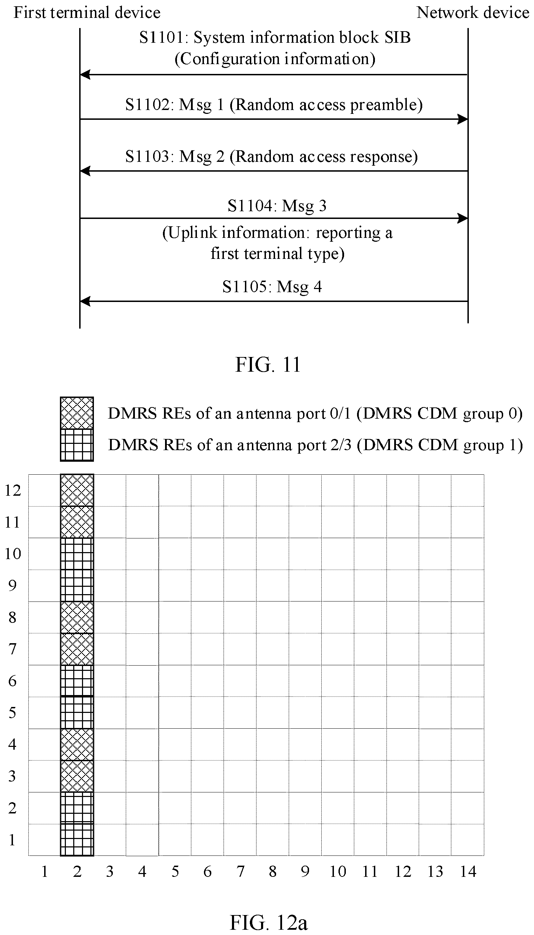

Solution 3: FIG. 11 shows a data transmission method, and the method mainly includes the following processes.

S1101: A first terminal device obtains configuration information, where the configuration information indicates a demodulation reference signal DMRS corresponding to N3 terminal types, where N3 is an integer greater than or equal to 1, and the demodulation reference signal herein may be used to demodulate a message 3 (Msg 3).

In an optional implementation, a correspondence between a terminal type and an uplink transmission parameter corresponding to the terminal type may be set by predefining. The first terminal device may obtain the configuration information based on the predefined correspondence and a related configuration of an uplink transmission parameter obtained by an SIB in an initial access procedure, to be specific, determine a DMRS that can be used for a first terminal type. In another optional implementation, a network device may carry the foregoing configuration information in the system information SIB. Based on this, the first terminal device may determine, based on an indication in the SIB in the initial access procedure, the first terminal type to which the first terminal device belongs, and obtain the uplink transmission parameter that can be used for the first terminal type, for example, the DMRS. For example, that the system information SIB delivered by the network device and received by the first terminal device carries the foregoing configuration information is described in step S1101 in FIG. 11.

Optionally, time domain positions occupied by different DMRSs are different; frequency domain positions occupied by different DMRSs are different; sequences used for different DMRSs are different; and/or DMRSs implemented by multiplexing DMRS ports by using different OCCs are different. The following uses two types of DMRSs as an example to describe in detail specific implementations of different DMRSs with reference to Manner 1 and Manner 2.

Manner 1: Two types of DMRSs may be implemented by using different DMRS ports. It may be understood that the DMRS ports may also be understood as DMRS resource elements (REs) of a pilot port and an antenna port, or the like. The DMRS ports are multiplexed through frequency division multiplexing (frequency division multiplexing, FDM) and code division multiplexing (code division multiplexing, CDM). Each DMRS CDM group is divided, through multiplexing, into a plurality of DMRS ports by using an orthogonal cover code (orthogonal cover code, OCC). That DMRS ports in this embodiment of this application are different includes: frequency domain positions of different DMRS ports are different; time domain positions of different DMRS ports are different; and/or different DMRS ports are multiplexed by using different OCCs.

A 5G NR system supports two DMRS types (a DMRS type 1 and a DMRS type 2), and there are a DMRS with a single front-loaded (Front-loaded) symbol and a DMRS with double front-loaded symbols. The DMRS type 1 with a single front-loaded symbol supports a maximum of four DMRS ports; the DMRS type 1 with double front-loaded symbols supports a maximum of eight DMRS ports; the DMRS type 2 with a single front-loaded symbol supports a maximum of six DMRS ports; and the DMRS type 2 with double front-loaded symbols supports a maximum of 12 DMRS ports. The following describes in detail manners of multiplexing and configuring a DMRS port for the two DMRS types.

For a reference signal of the DMRS type 1, DMRS ports are divided into two DMRS CDM groups.

For example, FIG. 12a shows that in the DMRS type 1, the single front-loaded symbol is an orthogonal frequency division multiplexing (orthogonal frequency division multiplexing, OFDM) symbol numbered 2 on a horizontal axis. Subcarriers (on a vertical axis in the figure) of the OFDM symbol are divided into two groups, to be specific, the subcarriers of the OFDM symbol are divided into two DMRS CDM groups. Each DMRS CDM group corresponds to two DMRS ports multiplexed by using the single OFDM symbol in an OCC manner. As shown FIG. 12a, a DMRS CDM group 0 corresponds to DMRS resource elements (REs) of an antenna port 0/1, and a DMRS CDM group 1 corresponds to DMRS REs of an antenna port 2/3. To be specific, the DMRS CDM group 0 corresponds to a DMRS port 0 and a DMRS port 1, and the DMRS CDM group 1 corresponds to a DMRS port 2 and a DMRS port 3.

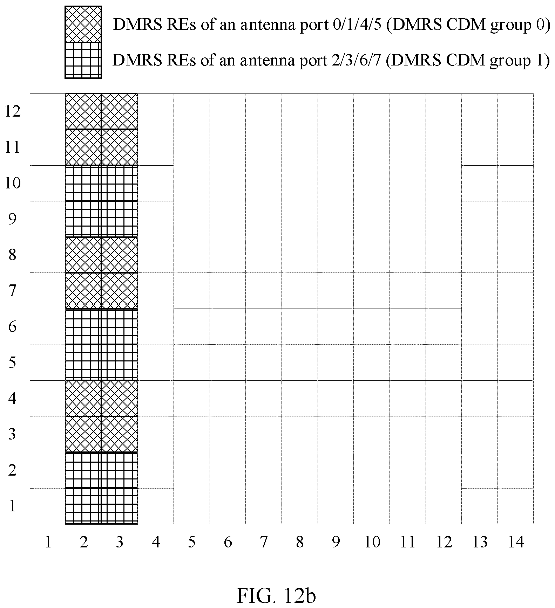

For example, as shown in FIG. 12b, for a DMRS with double front-loaded symbols (corresponding to OFDM symbols numbered 2 and 3), subcarriers of the OFDM symbols are divided into two groups, to be specific, the subcarriers of the OFDM symbols are divided into two DMRS CDM groups. Each DMRS CDM group corresponds to four DMRS ports multiplexed by using the dual OFDM symbols in an OCC manner. As shown in FIG. 12b, a DMRS CDM group 0 corresponds to DMRS REs of an antenna port 0/1/4/5, and a DMRS CDM group 1 corresponds to DMRS REs of an antenna port 2/3/6/7. To be specific, the DMRS CDM group 0 corresponds to a DMRS port 0, a DMRS port 1, a DMRS port 4, and a DMRS port 5, and the DMRS CDM group 1 corresponds to a DMRS port 2, a DMRS port 3, a DMRS port 6, and a DMRS port 7.

For a reference signal of the DMRS type 2, DMRS ports are divided into three DMRS CDM groups.

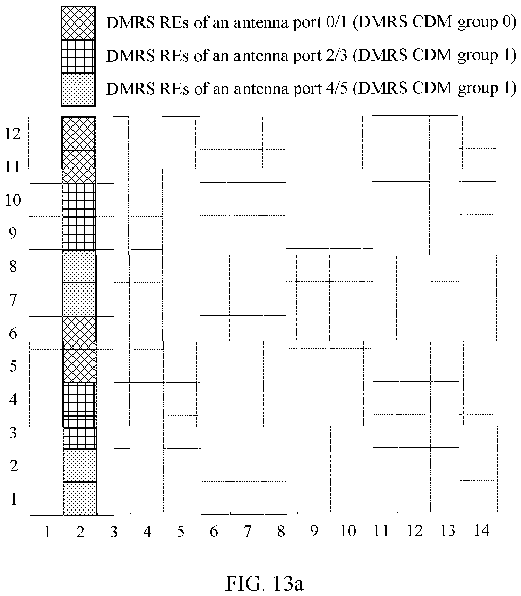

For example, as shown in FIG. 13a, for a DMRS with a single front-loaded symbol (corresponding to an OFDM symbol numbered 2), subcarriers of the OFDM symbol are divided into three groups, to be specific, the subcarriers of the OFDM symbol are divided into three DMRS CDM groups. Each DMRS CDM group corresponds to two DMRS ports multiplexed by using the single OFDM symbol in an OCC manner. As shown in FIG. 13a, a DMRS CDM group 0 corresponds to DMRS REs of an antenna port 0/1, and a DMRS CDM group 1 corresponds to DMRS REs of an antenna port 2/3, and a DMRS CDM group 2 corresponds to DMRS REs of an antenna port 4/5. To be specific, the DMRS CDM group 0 corresponds to a DMRS port 0 and a DMRS port 1, the DMRS CDM group 1 corresponds to a DMRS port 2 and a DMRS port 3, and the DMRS CDM group 2 corresponds to a DMRS port 4 and a DMRS port 5.

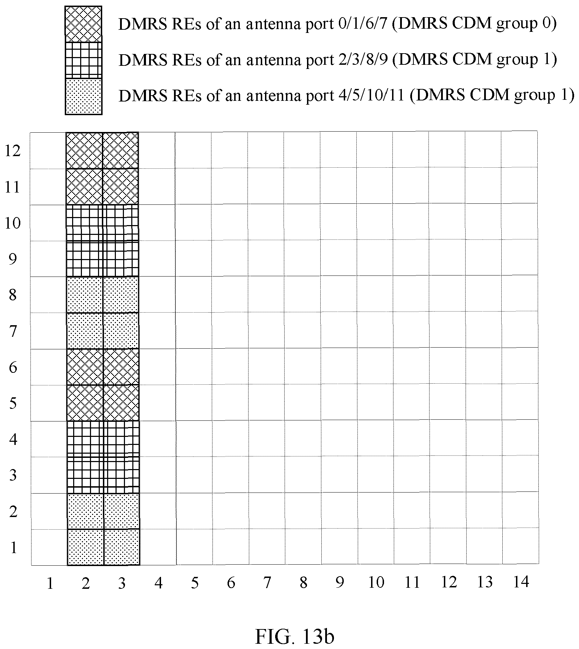

As shown in FIG. 13b, for a DMRS with double front-loaded symbols (corresponding to OFDM symbols numbered 2 and 3), subcarriers of the OFDM symbols are divided into three groups, to be specific, the subcarriers of the OFDM symbols are divided into three DMRS CDM groups. Each DMRS CDM group corresponds to four OFDM ports multiplexed by using the double OFDM symbols in an OCC manner. As shown in FIG. 13b, a DMRS CDM group 0 corresponds to DMRS REs of an antenna port 0/1/6/7, a DMRS CDM group 1 corresponds to DMRS REs of an antenna port 2/3/8/9, and a DMRS CDM group 2 corresponds to DMRS REs of an antenna port 4/5/10/11. To be specific, the DMRS CDM group 0 corresponds to a DMRS port 0, a DMRS port 1, a DMRS port 6, and a DMRS port 7, the DMRS CDM group 1 corresponds to a DMRS port 2, a DMRS port 3, a DMRS port 8, and a DMRS port 9, and the DMRS CDM group 2 corresponds to a DMRS port 4, a DMRS port 5, a DMRS port 10, and a DMRS port 11. It should be noted that the foregoing division of DMRS ports is merely used as some examples. In actual application, another division solution may be used. This is not limited in this embodiment of this application.

Manner 2: Two types of DMRSs are implemented by using a same DMRS port but different sequences, where using different sequences includes using different sequences to generate formulas, initialization parameters, sequence expressions, and/or the like.

S1102: The first terminal device sends an Msg 1 (also referred to as a preamble (preamble)) to the network device based on an Msg 1 resource shared with another terminal device.

S1103: The network device sends an Msg 2, where the Msg 2 includes a random access response, and the Msg 2 may further be used for scheduling an Msg 3.

S1104: Send uplink information based on a DMRS corresponding to a terminal type of the first terminal. The uplink information is uplink information sent when the first terminal is in a non-connected state. In the four-step random access method, the uplink information includes the message 3 (Msg 3) in a random access procedure.

S1105: The network device may perform RRC configuration on the terminal device by using an Msg 4. DCI scrambled by using a TC-RNTI carries uplink control channel (physical uplink control channel, PUCCH) indication information used to feed back an ACK/NACK.

In this embodiment of this application, in the four-step random access procedure, terminal types are distinguished based on a DMRS included in the Msg 3, so that a terminal capability may be reported. When demodulating physical layer information, a network may learn about a capability of the terminal device, for example, a receive antenna capability, so that the network may learn about a terminal antenna capability earlier. This helps properly schedule an Msg 4 resource for the terminal.

In addition, an embodiment of this application further provides a solution for reporting a terminal type in a small packet transmission process. The following describes in detail with reference to Solution 4.

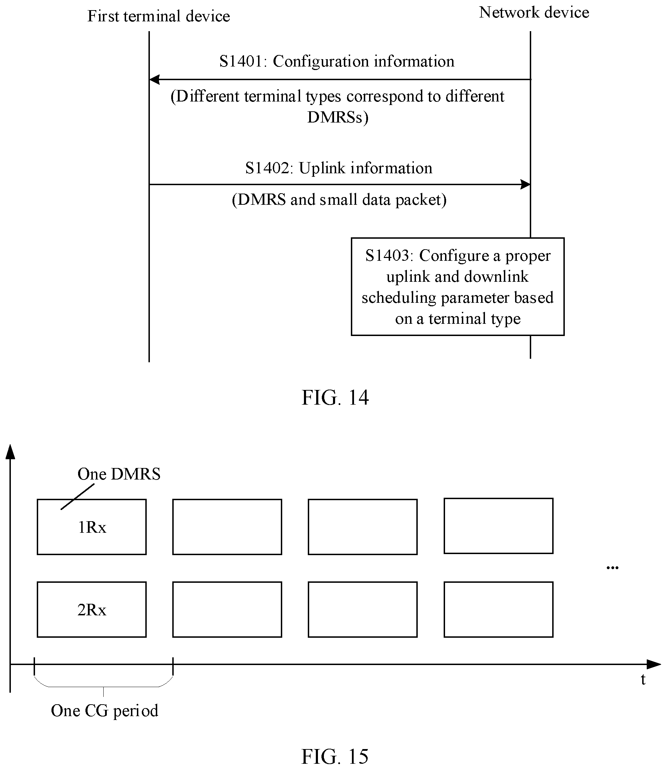

Solution 4: FIG. 14 shows a data transmission process, and the data transmission process mainly includes the following steps.

S1401: A first terminal device obtains configuration information, where the configuration information indicates a demodulation reference signal DMRS corresponding to N3 terminal types, where N3 is an integer greater than or equal to 1, and the demodulation reference signal herein may be used to demodulate a message 3 (Msg 3).

Optionally, a network device may carry configuration information, for example, a CG-SDT resource configuration, including CG PUSCH DMRS resources allocated to different terminal types, in a system information block SIB. In this case, the first terminal device may determine, based on the CG-SDT resource configuration in the SIB, a DMRS that can be used for a terminal type to which the first terminal device belongs. For example, assuming that terminal device types are divided into two types: a 1Rx terminal of a low-capability terminal REDCAP and a 2Rx terminal of a low-capability terminal REDCAP. In the CG-SDT resource configuration of the SIB, at least two DMRSs need to be configured, where at least one DMRS is used for the 1Rx terminal to send CG-SDT, and at least one DMRS is used for the 2Rx terminal to send CG-SDT. FIG. 15 is a schematic diagram of DMRS allocation. There are two DMRSs in one CG period (period). The two DMRSs occupy a same time domain resource but occupy different frequency domains. In the two DMRSs, one DMRS is used for the 1Rx terminal to send the CG-SDT, and the other DMRS is used for the 2Rx terminal to send the CG-SDT.

Optionally, time domain positions occupied by different DMRSs are different; frequency domain positions occupied by different DMRSs are different; sequences used for different DMRSs are different; and/or DMRSs implemented by multiplexing DMRS ports by using different OCCs are different. For specific implementations of different DMRSs, refer to the solution in S1101. Details are not described again in this embodiment of this application.

S1402: The first terminal device sends uplink information based on a DMRS corresponding to a terminal type of the first terminal device, where the uplink information includes uplink data that is based on a configured grant CG.

Specifically, the first terminal device may send, on a configured grant CG resource, the uplink data that is based on the configured grant CG, where the uplink data that is based on the configured grant CG includes a small data packet.

S 1403: The network device determines a type of the first terminal device based on the DMRS, for example, determines an antenna capability of the first terminal device, to configure proper uplink and downlink scheduling parameters, such as a PDCCH parameter, a bit rate, a modulation order, and an aggregation level. A PDCCH is transmitted to UE to perform ACK/NACK feedback resources configuration.

In this embodiment of this application, based on a small packet transmission process, different terminal types are distinguished by using the DMRS, so that a manner of reporting a terminal type such as a terminal antenna capability is more flexible. A network identifies the antenna capability of the terminal device by using different CG PUSCH DMRSs, so that feedback resource configuration may be properly determined as soon as possible based on the antenna capability.

In the foregoing embodiments provided in this application, the methods provided in embodiments of this application are separately described from the perspective of the network device, the terminal device, and interaction between the network device and the terminal device. To implement functions in the method provided in the foregoing embodiments of this application, the network device and the terminal may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on particular applications and design constraints of the technical solutions.

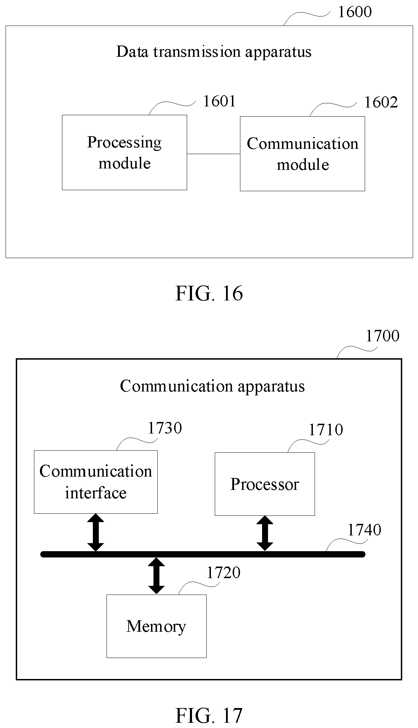

Based on a same concept, as shown in FIG. 16, an embodiment of this application provides a data transmission apparatus 1600. The apparatus 1600 includes a processing module 1601 and a communication module 1602. The communication apparatus 1600 may be a network device, or an apparatus that is applied to the network device and that can support the network device to perform a data transmission method. Alternatively, the communication apparatus 1600 may be a terminal device, or an apparatus that is applied to the terminal device and that can support the terminal device to perform a data transmission method.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a component that is in the communication module and that is configured to implement a receiving function may be considered as a receiving unit. It should be understood that the communication module is configured to perform a sending operation and a receiving operation on a network device side or a terminal device side in the foregoing method embodiments. A component that is in the communication module and that is configured to implement a sending function is considered as a sending unit. In other words, the communication module includes the receiving unit and the sending unit. When the apparatus 1600 is used in a network device, the receiving unit included in the communication module 1602 of the apparatus 1600 is configured to perform the receiving operation on the network device side, for example, data from a terminal device is received. The sending unit included in the communication module 1602 of the apparatus 1600 is configured to perform the sending operation on the network device side, for example, data is sent to the terminal device. When the apparatus 1600 is used in a terminal device, the receiving unit included in the communication module 1602 of the apparatus 1600 is configured to perform the receiving operation on the terminal device side, for example, data from a network device is received. The sending unit included in the communication module 1602 of the apparatus 1600 is configured to perform the sending operation on the terminal device side, for example, data is sent to the network device. In addition, it should be noted that, if the apparatus is implemented by using a chip/chip circuit, the communication module may be an input/output circuit and/or a communication interface, and perform an input operation (corresponding to the foregoing receiving operation) and an output operation (corresponding to the foregoing sending operation). The processing module is an integrated processor, a microprocessor, or an integrated circuit.

The following describes in detail implementations in which the apparatus 1600 is used in the terminal device.

In a first implementation, the apparatus 1600 includes:

the processing module 1601, configured to generate uplink information; and
the communication module 1602, configured to send uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a physical uplink shared channel resource unit PRU that can be used for a first terminal type, a type of the first terminal device is the first terminal type, and PRUs that can be used for different terminal types are different.

In the foregoing design, it is designed that PRUs used for different terminal types are different, and a network device may distinguish between types of terminal devices based on the uplink information. The network device may configure a related uplink and downlink scheduling parameter for each of different terminal types, to implement optimized and proper configuration. This helps improve system performance.

In an optional implementation, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related uplink scheduling parameter for the terminal device.

In an optional implementation, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information sent when the first terminal device is in a non-connected state. Before the network device is accessed, the network device is enabled to learn about a status of the terminal device, so that the network device configures the related uplink and downlink scheduling parameter as early as possible. This helps improve system performance.

In a second implementation, the apparatus 1600 includes:

the processing module 1601, configured to generate uplink information of a first terminal device; and
the communication module 1602, configured to send the uplink information of the first terminal device on a second resource in a first transmission manner, where the uplink information includes a preamble, the preamble is a preamble corresponding to the first transmission manner, and physical uplink shared channel resource units PRUs corresponding to preambles corresponding to different transmission manners are different; or the second resource is a PRU corresponding to the first transmission manner, and PRUs corresponding to different transmission manners are different.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.

In an optional implementation, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.

In a third implementation, the apparatus 1600 includes:

the communication module 1602, configured to obtain configuration information, where the configuration information indicates a demodulation reference signal DMRS corresponding to N3 terminal types, where N3 is an integer greater than or equal to 1; and
the processing module 1601, configured to send uplink information based on a DMRS corresponding to a terminal type of a first terminal device by using the communication module, where the uplink information includes a message 3 in a random access procedure or uplink data that is based on a configured grant CG.

In the foregoing design, the terminal types are distinguished based on a DMRS included in the Msg 3, or the terminal types are distinguished based on a DMRS in a small packet transmission process, to report the terminal types. When demodulating physical layer information, a network may learn about a capability of a terminal device, for example, a receive antenna capability. In this way, the network may learn about an antenna capability of a terminal earlier. This helps properly schedule an Msg 4 resource for the terminal.

In a possible design, the uplink information is uplink information sent when the first terminal device is in a non-connected state.

In a possible design, DMRSs corresponding to different terminal types are different.

The following describes in detail implementations in which the apparatus 1600 is used in the network device.

In a first implementation, the apparatus 1600 includes:

the communication module 1602, configured to receive uplink information of a first terminal device on a first resource, where the uplink information includes a preamble, the preamble is a preamble that is in the first resource and that can be used for a first terminal type, a type of the first terminal device is the first terminal type, the first resource corresponds to a preamble that can be used for N1 terminal types, where N1 is an integer greater than or equal to 1, and physical uplink shared channel resource units PRUs corresponding to preambles that can be used for different terminal types are different; or the first resource is a PRU that can be used for a first terminal type, a type of the first terminal device is the first terminal type, and PRUs that can be used for different terminal types are different; and
the processing module 1601, configured to determine the type of the first terminal device based on the uplink information.

In the foregoing design, it is designed that PRUs used for different terminal types are different, and a network device may distinguish between types of terminal devices based on the uplink information. The network device may configure related uplink and downlink scheduling parameter for each of different terminal types, to implement optimized and proper configuration. This helps improve system performance.

In a possible design, demodulation reference signals DMRSs corresponding to the PRUs that can be used for different terminal types are different, or physical uplink shared channel PUSCH time-frequency resources corresponding to the PRUs that can be used for different terminal types are different. In this way, the network device does not need to demodulate data, and may determine the terminal type as early as possible when demodulating physical layer information. This helps properly configure a related subsequent downlink scheduling parameter for the terminal device.

In a possible design, the first resource corresponds to one synchronization signal block, the synchronization signal block is associated with X preambles with consecutive numbers, the X preambles include a preamble that can be used for N2 terminal types, where N2 is an integer greater than or equal to N1, and numbers of preambles that can be used for a same terminal type in the X preambles are consecutive. In this way, preambles selected by terminals of a same type may be centralized in a same RO, and the network device may pertinently configure the subsequent downlink scheduling parameter based on the terminal type.

In a possible design, the uplink information is uplink information received from the terminal device when the first terminal device is in a non-connected state. Before the network device is accessed, the network device is enabled to learn about a status of the terminal device, so that the network device configures the related uplink and downlink scheduling parameter as early as possible. This helps improve system performance.

In a possible design, antenna capabilities corresponding to different terminal types are different.

In a second implementation, the apparatus 1600 includes:

the communication module 1602, configured to receive uplink information of a first terminal device on a second resource, where the uplink information of the first terminal device is sent in a first transmission manner; and the uplink information includes a preamble, the preamble is a preamble corresponding to the first transmission manner, and physical uplink shared channel resource units PRUs corresponding to preambles corresponding to different transmission manners are different; or the first resource is a PRU corresponding to the first transmission manner, and PRUs corresponding to different transmission manners are different; and

the processing module 1601, configured to determine the first transmission manner based on the uplink information.

In the foregoing design, it is designed that the PRUs corresponding to different transmission manners are different, and the network device may distinguish between types of terminal devices based on the uplink information. The network device may configure a related uplink and downlink scheduling parameter for each of different terminal types, to implement optimized and proper configuration. This helps improve system performance.

In an optional implementation, the first transmission manner is random access carrying a small data packet or random access without carrying a small data packet. Small packet transmission can be implemented in a random access procedure. Additional signaling overheads and energy consumption overheads caused by first entering a connected state and then sending a small packet by the terminal device are avoided.

In a third implementation, the apparatus 1600 includes:

the communication module 1602, configured to send configuration information, where the configuration information indicates a demodulation reference signal DMRS corresponding to N3 terminal types, where N3 is an integer greater than or equal to 1;

the communication module 1602, further configured to receive uplink information based on a DMRS corresponding to a terminal type of a first terminal device 1602, where the uplink information includes a message 3 in a random access procedure or uplink data that is based on a configured grant CG; and

the processing module 1601, configured to determine the terminal type of the first terminal device based on the uplink information.

In the foregoing design, the terminal types are distinguished based on a DMRS included in the Msg 3, or the terminal types are distinguished based on a DMRS in a small packet transmission process, to report the terminal types. When demodulating physical layer information, a network may learn about a capability of a terminal device, for example, a receive antenna capability. In this way, the network may learn about an antenna capability of a terminal earlier. This helps properly schedule an Msg 4 resource for the terminal.

In an optional implementation, the uplink information is uplink information sent when the first terminal device is in a non-connected state.

In an optional implementation, DMRSs corresponding to different terminal types are different.

In this embodiment of this application, the module division is an example, and is merely logical function division and may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on a same technical concept, this application further provides a communication apparatus 1700. The communication apparatus 1700 may be a chip or a chip system. Optionally, in this embodiment of this application, the chip system may include a chip, or may include the chip and another discrete device.

The communication apparatus 1700 may be configured to implement functions of the terminal device or the network device in the communication system shown in FIG. 1. The communication apparatus 1700 may include at least one processor 1710. The processor 1710 is coupled to a memory. Optionally, the memory may be located in the apparatus, the memory may be integrated with the processor, or the memory may be located outside the apparatus. For example, the communication apparatus 1700 may further include at least one memory 1720. The memory 1720 stores a necessary computer program, configuration information, a computer program or an instruction, and/or data for implementing any one of the foregoing embodiments. The processor 1710 may execute the computer program stored in the memory 1720, to complete the method in any one of the foregoing embodiments.

The coupling in this embodiment of this application is an indirect coupling or a communication connection between apparatuses, units, or modules in an electrical form, a mechanical form, or another form, and is used for information exchange between the apparatuses, the units, or the modules. The processor 1710 may operate in collaboration with the memory 1720. A specific connection medium between the transceiver 1730, the processor 1710, and the memory 1720 is not limited in this embodiment of this application.

The communication apparatus 1700 may further include a communication interface 1730, and the communication apparatus 1700 may perform information exchange with another device through the communication interface 1730. For example, the communication interface 1701 may be a transceiver, a circuit, a bus, a module, or another type of communication interface. When the communication apparatus 1700 is a chip-type apparatus or circuit, the communication interface 1730 in the apparatus 1700 may also be an input/output circuit, and may input information (or referred to as receiving information) and output information (or referred to as sending information). The processor is an integrated processor, a microprocessor, an integrated circuit, or a logic circuit. The processor may determine output information based on input information.

Optionally, as shown in FIG. 17, the communication interface 1730, the processor 1710, and the memory 1720 are connected to each other by using a bus 1740. The bus 1740 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly implemented by a hardware processor, or may be implemented by using a combination of hardware in a processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

In a possible implementation, the communication apparatus 1700 may be used in a terminal device. Specifically, the communication apparatus 1700 may be a terminal device, or an apparatus that can support the terminal device to implement the function of the terminal device in any one of the foregoing embodiments. The memory 1720 stores a necessary computer program, a computer program, or an instruction, and/or data for implementing the function of the terminal device in any one of the foregoing embodiments. The processor 1710 may execute the computer program stored in the memory 1720, to complete the method performed by the first terminal device in any one of the foregoing embodiments. Used in a terminal device, the communication interface in the communication apparatus 1700 may be configured to interact with a network device, and send information to the network device or receive information from the network device.

In another possible implementation, the communication apparatus 1700 may be used in a network device. Specifically, the communication apparatus 1700 may be a network device, or an apparatus that can support the network device to implement the function of the network device in any one of the foregoing embodiments. The memory 1720 stores a necessary computer program, a computer program, or an instruction, and/or data for implementing the function of the network device in any one of the foregoing embodiments. The processor 1710 may execute the computer program stored in the memory 1720, to complete the method performed by the network device in any one of the foregoing embodiments. Used in a network device, the communication interface in the communication apparatus 1700 may be configured to interact with a terminal device, and send information to the terminal device or receive information from the terminal device.

The communication apparatus 1700 provided in this embodiment may be used in a terminal device to complete the method performed by the terminal device, or may be used in a network device to complete the method performed by the network device. Therefore, for technical effects that can be achieved by the computer-readable storage medium, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly implemented by a hardware processor, or may be implemented by using a combination of hardware in a processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, computer programs or instructions, and/or data.

Based on the foregoing embodiments, an embodiment of this application further provides a computer program. When the computer program is run on a computer, the computer is enabled to perform the data transmission methods provided in embodiments shown in FIG. 6, FIG. 9, FIG. 10, FIG. 11, and FIG. 14 from a perspective of a terminal device side or a network device side.

Based on the foregoing embodiments, an embodiment of this application further provides a computer-readable storage medium. The computer-readable storage medium stores a computer program. When the computer program is executed by a computer, the computer is enabled to perform the data transmission methods provided in embodiments shown in FIG. 6, FIG. 9, FIG. 10, FIG. 11, and FIG. 14 from a perspective of a terminal device side or a network device side. The storage medium may be any available medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be for carrying or storing expected program code in a form of instructions or a data structure and can be accessed by the computer.

Based on the foregoing embodiments, an embodiment of this application provides a communication system, including a terminal device and a network device. The terminal device and the network device may implement the data transmission methods provided in embodiments shown in FIG. 6, FIG. 9, FIG. 10, FIG. 11, and FIG. 14.

Based on the foregoing embodiments, an embodiment of this application further provides a chip. The chip is configured to read a computer program stored in a memory and implement the data transmission methods provided in embodiments shown in FIG. 6, FIG. 9, FIG. 10, FIG. 11, and FIG. 14 from a perspective of a terminal device side or a network device side.

Based on the foregoing embodiments, an embodiment of this application provides a chip system. The chip system includes a processor, configured to support a computer apparatus to implement functions of the terminal device or the access network device in embodiments shown in FIG. 6, FIG. 9, FIG. 10, FIG. 11, and FIG. 14. In a possible design, the chip system further includes a memory. The memory is configured to store a program and data that are necessary for the computer apparatus. The chip system may include a chip, or may include the chip and another discrete device.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the claims of this application and their equivalent technologies.

**Claims**

1. A data transmission method, comprising:

   sending uplink information of a first terminal device on a first resource, wherein
   the uplink information comprises a preamble, the preamble is a preamble that is available for a first terminal type in the first resource, a type of the first terminal device is the first terminal type, the first resource corresponds to a preamble available for N1 terminal types, wherein N1 is an integer greater than or equal to 1, and physical uplink shared channel resource units PRUs corresponding to preambles available for different terminal types are different; or
   the first resource is a PRU available for a first terminal type, a type of the first terminal device is the first terminal type, and PRUs available for different terminal types are different.

2. The method according to claim 1, wherein demodulation reference signals DMRSs corresponding to the PRUs available for different terminal types are different, or physical uplink shared channel PUSCH time-frequency resources corresponding to the PRUs available for different terminal types are different.

3. The method according to claim 1 or 2, wherein the first resource corresponds to one synchronization signal block, the synchronization signal block is associated with X preambles with consecutive numbers, the X preambles comprise a preamble available for N2 terminal types, wherein N2 is an integer greater than or equal to N1, and numbers of preambles available for a same terminal type in the X preambles are consecutive.

4. The method according to any one of claims 1 to 3, wherein the uplink information is uplink information sent when the first terminal device is in a non-connected state.

5. The method according to any one of claims 1 to 4, wherein antenna capabilities corresponding to different terminal types are different.

6. A data transmission method, comprising:

   sending uplink information of a first terminal device on a second resource in a first transmission manner, wherein
   the uplink information comprises a preamble, the preamble is a preamble corresponding to the first transmission manner, and physical uplink shared channel resource units PRUs corresponding to preambles corresponding to different transmission manners are different; or
   the second resource is a PRU corresponding to the first transmission manner, and PRUs corresponding to different transmission manners are different.

7. The method according to claim 6, wherein the first transmission manner is random access carrying a small data packet or random access without carrying a small data packet.

8. A data transmission method, comprising:

obtaining configuration information, wherein the configuration information indicates a demodulation reference signal DMRS corresponding to N3 terminal types, wherein N3 is an integer greater than or equal to 1; and sending uplink information based on a DMRS corresponding to a terminal type of a first terminal device, wherein the uplink information comprises a message 3 in a random access procedure or uplink data that is based on a configured grant CG.

9. The method according to claim 8, wherein the uplink information is uplink information sent when the first terminal device is in a non-connected state.

10. The method according to claim 8 or 9, wherein DMRSs corresponding to different terminal types are different.

11. A data transmission method, comprising:

receiving uplink information of a first terminal device on a first resource, wherein
the uplink information comprises a preamble, the preamble is a preamble that is available for a first terminal type in the first resource, a type of the first terminal device is the first terminal type, the first resource corresponds to a preamble available for N1 terminal types, wherein N1 is an integer greater than or equal to 1, and physical uplink shared channel resource units PRUs corresponding to preambles available for different terminal types are different; or
the first resource is a PRU available for a first terminal type, a type of the first terminal device is the first terminal type, and PRUs available for different terminal types are different.

12. The method according to claim 11, wherein demodulation reference signals DMRSs corresponding to the PRUs available for different terminal types are different, or physical uplink shared channel PUSCH time-frequency resources corresponding to the PRUs available for different terminal types are different.

13. The method according to claim 11 or 12, wherein the first resource corresponds to one synchronization signal block, the synchronization signal block is associated with X preambles with consecutive numbers, the X preambles comprise a preamble available for N2 terminal types, wherein N2 is an integer greater than or equal to N1, and numbers of preambles available for a same terminal type in the X preambles are consecutive.

14. The method according to any one of claims 11 to 13, wherein the uplink information is uplink information received from the first terminal device when the first terminal device is in a non-connected state.

15. The method according to any one of claims 11 to 14, wherein antenna capabilities corresponding to different terminal types are different.

16. A data transmission method, comprising:

receiving uplink information of a first terminal device on a second resource, wherein a transmission manner of the uplink information is a first transmission manner; and
the uplink information comprises a preamble, the preamble is a preamble corresponding to the first transmission manner, and physical uplink shared channel resource units PRUs corresponding to preambles corresponding to different transmission manners are different; or
the second resource is a PRU corresponding to the first transmission manner, and PRUs corresponding to different transmission manners are different.

17. The method according to claim 16, wherein the first transmission manner is random access carrying a small data packet or random access without carrying a small data packet.

18. A data transmission method, comprising:

sending configuration information, wherein the configuration information indicates a demodulation reference signal DMRS corresponding to N3 terminal types, wherein N3 is an integer greater than or equal to 1; and
receiving uplink information based on a DMRS corresponding to a terminal type of a first terminal device, wherein the uplink information comprises a message 3 in a random access procedure or uplink data that is based on a configured grant CG.

19. The method according to claim 18, wherein the uplink information is uplink information received when the first terminal device is in a non-connected state.

20. The method according to claim 18 or 19, wherein DMRSs corresponding to different terminal types are different.

21. A data transmission apparatus, configured to implement the method according to any one of claims 1 to 10.

22. A data transmission apparatus, configured to implement the method according to any one of claims 11 to 20.

23. A communication apparatus, wherein the communication apparatus comprises a processor and a memory, the memory is coupled to the processor, and the processor is configured to perform the method according to any one of claims 1 to 10.

24. A communication apparatus, wherein the communication apparatus comprises a processor and a memory, the memory is coupled to the processor, and the processor is configured to perform the method according to any one of claims 11 to 20.

25. A communication system, comprising the apparatus according to claim 21 or 23 and the apparatus according to claim 22 or 24.

26. A computer-readable storage medium, wherein the computer-readable storage medium stores instructions, and when the instructions are run on a computer, the computer is enabled to perform the method according to any one of claims 1 to 10 or the method according to any one of claims 11 to 20.

27. A computer program product, comprising instructions, wherein when the instructions are run on a computer, the computer is enabled to perform the method according to any one of claims 1 to 10 or the method according to any one of claims 11 to 20.

FIG. 1

One slot    One slot    CORESET#0

DCI scrambled by
using an SI-RNTI

PDSCH carrying system information

Initial
downlink
BWP

| SSB | SSB | SSB | SSB |

PSS | PBCH | SSS | PBCH

S1: A terminal device finds the SSB

S2: The terminal device obtains an MIB from the
PBCH of the SSB

S3: The terminal device obtains CSS and
CORESET#0 in the MIB

S4: The terminal device blindly detects the DCI
scrambled by using the SI-RNTI

S5: The terminal device obtains, based on an DCI
indication, the PDSCH carrying the system
information

FIG. 2

EP 4 319 411 A1

Terminal device
Network device

A1: Msg A
(Random access preamble + PUSCH)

A2: Msg B
(Random access response)

FIG. 3

One RO

| SSB 0 Preambles 0 to 3 | SSB 1 Preambles 8 to 11 | SSB 2 Preambles 16 to 19 | SSB 3 Preambles 24 to 27 |

| SSB 0 Preambles 4 to 7 | SSB 1 Preambles 12 to 15 | SSB 2 Preambles 20 to 23 | SSB 3 Preambles 28 to 31 |

...

Frequency domain f

Time domain t

FIG. 4

FIG. 5

EP 4 319 411 A1

First terminal device

Network device

S601: Determine an uplink transmission parameter that can be used for a first terminal type

S602: Msg A

Random access preamble + PUSCH: for distinguishing between terminal types

S603: Msg B

(Random access response)

FIG. 6

FIG. 7

PUSCH

PRACH

One RO

Frequency domain f

| SSB 0 Preambles 0 to 3 | SSB 1 Preambles 8 to 11 | SSB 2 Preambles 16 to 19 | SSB 3 Preambles 24 to 27 |
| SSB 0 Preambles 4 to 7 | SSB 1 Preambles 12 to 15 | SSB 2 Preambles 20 to 23 | SSB 3 Preambles 28 to 31 |

Time domain t

Mapping

Frequency domain f

| PUSCH occasion 1 DMRS 1    DMRS 2 0 and 1      8 and 9 | PUSCH occasion 5 DMRS 1    DMRS 2 16 and 17  24 and 25 |
| PUSCH occasion 2 DMRS 1    DMRS 2 2 and 3      10 and 11 | PUSCH occasion 6 DMRS 1    DMRS 2 18 and 19  26 and 27 |
| PUSCH occasion 3 DMRS 1    DMRS 2 4 and 5      12 and 13 | PUSCH occasion 7 DMRS 1    DMRS 2 20 and 21  28 and 29 |
| PUSCH occasion 4 DMRS 1    DMRS 2 6 and 7      14 and 15 | PUSCH occasion 8 DMRS 1    DMRS 2 22 and 23  30 and 31 |

SSB 0      SSB 1      SSB 2      SSB 3

Time domain t

1RX terminal: PUSCH occasions 1 to 6
2RX terminal: PUSCH occasions 7 and 8

FIG. 8

EP 4 319 411 A1

First terminal device                           Network device

S901: Determine an uplink transmission parameter that can be used for a first transmission manner

S902: Msg A

Random access preamble + PUSCH: for distinguishing between transmission manners

S903: Msg B

(Random access response)

**FIG. 9**

Terminal device                               Network device

B1: Msg 1 (Random access preamble)

B2: Msg 2 (Random access response)

B3: Msg 3

B4: Msg 4

**FIG. 10**

First terminal device                                    Network device

S1101: System information block SIB
(Configuration information)

S1102: Msg 1 (Random access preamble)

S1103: Msg 2 (Random access response)

S1104: Msg 3
(Uplink information: reporting a
first terminal type)

S1105: Msg 4

FIG. 11

DMRS REs of an antenna port 0/1 (DMRS CDM group 0)

DMRS REs of an antenna port 2/3 (DMRS CDM group 1)

FIG. 12a

DMRS REs of an antenna port 0/1/4/5 (DMRS CDM group 0)

DMRS REs of an antenna port 2/3/6/7 (DMRS CDM group 1)

FIG. 12b

FIG. 13a

FIG. 13b

First terminal device        Network device

S1401: Configuration information

(Different terminal types correspond to different DMRSs)

S1402: Uplink information

(DMRS and small data packet)

S1403: Configure a proper uplink and downlink scheduling parameter based on a terminal type

FIG. 14

One DMRS

1Rx

2Rx

...

One CG period

t

FIG. 15

1600

Data transmission apparatus

1601                    1602

Processing          Communication
module                module

FIG. 16

1700

Communication apparatus

1730                    1710

Communication      Processor
interface

1740

1720

Memory

FIG. 17

## INTERNATIONAL SEARCH REPORT

International application No.

**PCT/CN2022/091016**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 上行, 资源, 终端, 设备, 类型, 前导, 物理上行共享信道资源单元, 解调参考信号, 传输方式, 非连接态, 空闲, 低能力终端, 同步信号块, UL, resource, PRU, type, MTC, H2H, preamble, DMRS, index, Redcap, UE, SSB, HARQ, msg1, msg3

### C. DOCUMENTS CONSIDERED TO BE RELEVANT

| Category* | Citation of document, with indication, where appropriate, of the relevant passages | Relevant to claim No. |
|---|---|---|
| PX | WO 2022061755 A1 (LENOVO BEIJING LTD.) 31 March 2022 (2022-03-31) description, paragraphs [0030]-[0150] | 1-27 |
| PX | HUAWEI et al. ""RAN1 aspects of RedCap UE type and identification"" *3GPP tsg_ran\wg1_rl1 R1-2104287*, 12 May 2021 (2021-05-12), | 1-27 |
| X | CN 102447546 A (CHINA ACADEMY OF TELECOMMUNICATIONS TECHNOLOGY) 09 May 2012 (2012-05-09) description, paragraphs [0044]-[0173] | 8,18,21-27 |
| Y | CN 102447546 A (CHINA ACADEMY OF TELECOMMUNICATIONS TECHNOLOGY) 09 May 2012 (2012-05-09) description, paragraphs [0044]-[0173] | 1-7,9-17,19-27 |
| Y | WO 2021063248 A1 (FG INNOVATION CO., LTD.) 08 April 2021 (2021-04-08) description, paragraphs [0037-[0111] | 1-7,9-17,19-27 |
| A | CN 110719650 A (CHINA ACADEMY OF INFORMATION AND COMMUNICATIONS TECHNOLOGY) 21 January 2020 (2020-01-21) entire document | 1-27 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 June 2022** | **18 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/091016**

**C.    DOCUMENTS CONSIDERED TO BE RELEVANT**

| Category* | Citation of document, with indication, where appropriate, of the relevant passages | Relevant to claim No. |
|---|---|---|
| A | WO 2021010803 A1 (SAMSUNG ELECTRONICS CO., LTD.) 21 January 2021 (2021-01-21) <br> entire document | 1-27 |

Form PCT/ISA/210 (second sheet) (January 2015)

**INTERNATIONAL SEARCH REPORT**
Information on patent family members

International application No.

**PCT/CN2022/091016**

| Patent document cited in search report | | | Publication date (day/month/year) | Patent family member(s) | | | Publication date (day/month/year) |
|---|---|---|---|---|---|---|---|
| WO | 2022061755 | A1 | 31 March 2022 | None | | | |
| CN | 102447546 | A | 09 May 2012 | WO | 2012041203 | A1 | 05 April 2012 |
| | | | | US | 2013294363 | A1 | 07 November 2013 |
| | | | | EP | 2645758 | A1 | 02 October 2013 |
| | | | | EP | 2645758 | A4 | 18 January 2017 |
| | | | | CN | 102447546 | B | 24 May 2019 |
| WO | 2021063248 | A1 | 08 April 2021 | None | | | |
| CN | 110719650 | A | 21 January 2020 | CN | 110719650 | B | 25 February 2022 |
| WO | 2021010803 | A1 | 21 January 2021 | KR | 20210010268 | A | 27 January 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110507908